# EUROPEAN PATENT SPECIFICATION

(11) **EP 1 894 392 B1**
(45) Date of publication and mention of the grant of the patent: **17.05.2017**
(21) Application number: 06767121.4
(22) Date of filing: 15.06.2006
(51) Int. Cl.: H04M 1/725, H04M 1/02, H04M 11/02

(54) **SYSTEM FOR CONNECTING CORDLESS TELEPHONES TO DOOR TELEPHONES**
SYSTEM ZUM VERBINDEN VON SCHNURLOSEN TELEFONEN MIT TÜRTELEFONEN
SYSTEME PERMETTANT DE BRANCHER DES TELEPHONES SANS FIL A DES INTERPHONES

(30) Priority: 15.06.2005 JP 2005174607; 30.06.2005 JP 2005191426
(43) Date of publication of application: 05.03.2008
(73) Proprietor: Panasonic Corporation, Kadoma-shi Osaka 571-8501 (JP)
(72) Inventor: SUGITANI, T. c/o Matsushita Elec. Ind. Co., Ltd., Osaka 540-6207 (JP); NAKAGAWA, K. c/o Matsushita Elec. Ind. Co., Ltd., Osaka 540-6207 (JP); SATOH, Etsuko c/o Matsushita Elec. Ind. Co., Ltd., Osaka 540-6207 (JP); ITO, Takatsugu c/o Matsushita Elec. Ind. Co., Ltd., Osaka 540-6207 (JP); FUKUDA, Shinji c/o Matsushita Elec. Ind. Co., Ltd., Osaka 540-6207 (JP)
(74) Representative: Eisenführ Speiser
(86) International application number: PCT/JP2006/312463
(87) International publication number: WO 2006/135106

(56) References cited:
- EP-A- 1 467 548
- DE-A1- 19 739 392
- DE-C1- 4 408 972
- US-A1- 2004 132 489
- US-B1- 6 388 996

## Description

### Technical Field

The present invention relates to a wireless communication apparatus in which a master station and a slave station carry out a communication in a time division multiplex and a communication method thereof

### Background Art

EP 1 467 548 A1 discloses a device which couples a door intercom system to digital enhanced cordless telecommunication or DECT cordless telephones for transmitting the ringing, speaking and opening functions. A DECT adapter is connected to the dwelling side hand set (3) of the intercom system or directly to the street side door module, whereby the DECT module can be operated as a fixed station or repeater.

DE 197 39 392 A1 discloses a door entry phone and intercom which has a door station with a modified mobile apparatus which is connected to the microphone and the loudspeaker of the door station. The mobile apparatus can get in connection with mobile stations provided as intercom via a base station. When the door bell is operated a signal is sent to the modified mobile apparatus which calls the allocated mobile stations. A door opening relay is provided next to the mobile apparatus and can be energized by a key operation on the mobile stations and the door opener is actuated. The DECT standard transmission module and the GAP code are used

DE 44 08 972 C2 relates to a door station with a bell, voice link and door opener function. According to the invention, a DECT mobile unit is provided as a door station in conjunction with a base station and associated handsets.

US 2004/0132489 A1 discloses a wireless multi-handset telephone system with integrated video monitoring. A speakerphone base unit, at least one camera module, at least one combination video/voice handset, and at least one voice handset operate together such that voice and data are transmitted (i) between the speakerphone base unit and the at least one camera module and (ii) between the speakerphone base unit and the at least one voice handset, and video images are transmitted from the at least one camera module to the at least one combination video/voice handset.

In recent years, a wireless technique has been developed remarkably, and a size, a weight and a price of a wireless communication apparatus have been reduced. Also in a communication apparatus to be utilized in an ordinary family, a wireless communication apparatus using a wireless communication has widely been spread.

For example, a typical wireless communication apparatus to be used in a home is a cordless telephone. Such a cordless telephone is constituted by a base unit connected to a public line and at least one remote unit, and the base unit and the remote unit are connected to each other through a wireless communication and a user can freely carry the remote unit, which has a high convenience.

On the other hand, there has widely been spread an intercom in which a sound is made through an indoor base unit provided in a room when a call button of an outdoor apparatus disposed in an entrance is pressed down, and it is possible to carry out talking to the outdoor apparatus, that is, talking to a visitor by pressing down a response button in the indoor base unit.

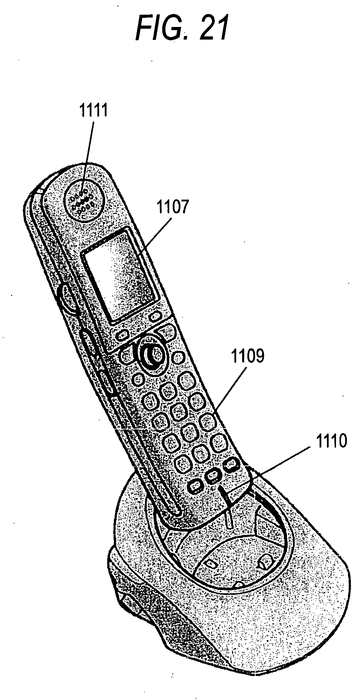

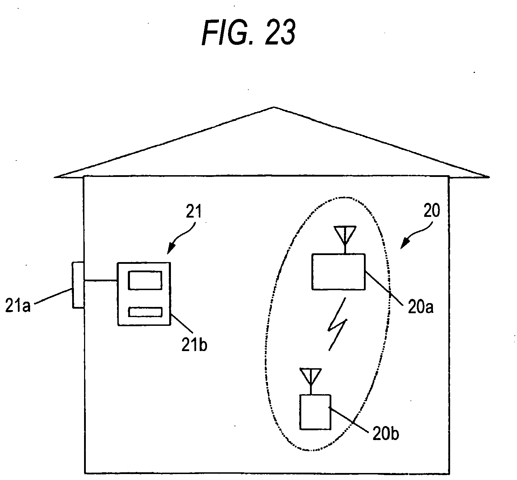

For example, when a cordless telephone base unit 20a and a plurality of cordless telephone remote units 20b in a cordless telephone 20 are set to be a master station and a slave station respectively as shown in Fig. 23, one cordless telephone remote unit 20b is disposed in a children's room on a second floor and one cordless telephone remote unit 20b is disposed in a bedroom so that it is not necessary to go to the cordless telephone base unit 20a for talking every incoming call if the cordless telephone base unit 20a is disposed in a living room on a first floor. Therefore, this is very convenient (In fig. 21, only one cordless telephone remote unit 20b is shown).

In an ordinary family, an intercom 21 with a camera is disposed in some cases. Referring to the intercom 21 with a camera, an outdoor apparatus 21 a including a camera, a microphone, a speaker and a ringing button for ringing a chime is provided on a gatepost and an indoor apparatus 21b including a monitor, a microphone, a speaker and a response button for setting a talking state is provided in a living room.

When a visitor presses down the ringing button, the chime is rung through the indoor apparatus 21b so that the visitor can be recognized. In order to make a response, however, it is necessary to go to the living room in which the indoor apparatus 21b is provided.

If there is such an outdoor apparatus as to give a notice by wireless also in a place apart from the indoor apparatus 21b when the ringing button is pressed down, it is not necessary to especially go to the living room in the same manner as the cordless telephone 20, which is supposed to be highly convenient. In other words, by setting the indoor apparatus 21b and the outdoor apparatus to be master and slave stations respectively in order to carry out a communication, it is possible to give a notice of a visitor 13 in a position placed apart or to have a conversation with the visitor 13.

However, the number of remote units which can be used for only the cordless telephone remote unit 20b and the outdoor apparatus is increased. For this reason, there is a problem in that respective remote units are to be looked for or the remote units are lost in use. Moreover, there is also a possibility that the cordless telephone 20 and the cordless intercom might cause an interference.

If the cordless telephone remote unit 20b can be used in common to communicate with the cordless telephone base unit 20a and the indoor apparatus 21b by wireless, the number of the remote units can be prevented from being increased. For this purpose, it is preferable that the cordless telephone remote unit 20b should be provided with a shared wireless portion corresponding to the cordless telephone base unit 20a and the indoor apparatus 21b respectively. Consequently, a weight of the cordless telephone remote unit in which a portability is important is increased, and furthermore, the cordless telephone 20 and the cordless intercom are not prevented from causing the interference even if the shared wireless portion is provided.

There has been known a wireless telephone base unit of a wireless communication system in which master stations and slave stations communicate with each other (see Patent Document 1, for example). The wireless telephone base unit serves to extract a timing of a time slot in a cellular station and to communicate with a wireless telephone remote unit in a transmitting time slot of the wireless communication apparatus base unit which does not overlap with the transmitting time slot of the cellular station based on the timing. By applying this technique to set the cellular station and the wireless communication apparatus base unit to be the cordless telephone base unit 20a and the indoor apparatus 21b, it is possible to prevent the interference of the cordless telephone base unit 20a and the indoor apparatus 21b and to cause the cordless telephone remote unit 21b to communicate with both of them by one wireless portion by extracting a timing of the other time slot and carrying out a communication so as to prevent the respective transmitting time slots from overlapping with each other based on the timing.

Furthermore, Patent Document 2 has described a technique for connecting a cordless telephone to an intercom by wireless in order to enhance a convenience in an installation in the connection of the cordless telephone and the intercom.

Moreover, another cordless intercom is constituted by a cordless telephone and an intercom in a combination of an intercom provided with a call button and a wireless transmitting/receiving portion and a cordless telephone provided with the wireless transmitting/receiving portion capable of talking to the intercom upon receipt of a call signal sent from the intercom in a form of an electric wave signal (for example, see the Patent Document 2). The cordless intercom can receive the call signal from the intercom in the form of the electric wave signal and can carry out talking between the intercom and the cordless telephone base unit and remote unit. More specifically, when the call button of the intercom is pressed down, a notice is given to the cordless telephone base unit through a wireless communication, and a call from the intercom is given through the cordless telephone base unit and remote unit in the same manner as an intercom call. When a response is given through the cordless telephone base unit and remote unit, a wireless link for transmitting a voice signal with the intercom and an image signal photographed by an outdoor apparatus is established so that a call from the intercom side can be answered through the cordless telephone base unit and remote unit.
[Patent Document 1] JP-A-7-87556 Publication
[Patent Document 2] JP-A-11-136373 Publication

In the wireless telephone base unit having the conventional structure, however, a transmission is only carried out in such a manner that the respective transmission timings do not overlap with each other synchronously with the transmission timing of the cellular station. Therefore, the wireless telephone remote unit can receive the respective transmissions. However, there has not been disclosed a technique for carrying out the other receipt in a state in which the wireless telephone remote unit performs a communication with the cellular station or the wireless telephone base unit. There is a problem in that even if both of the receipts are carried out during waiting, the other controlling wireless channel cannot be received depending on a communicating wireless channel after a transition to a communication state in some cases.

Moreover, the wireless telephone base unit having the conventional structure carries out a communication with the remote unit in a different frame timing from that in the cellular station. For this reason, there is a problem in that a shift is generated between the transmission slot of the wireless telephone base unit and the receipt slot of the wireless telephone remote unit and a slot which cannot be used is thus generated between the wireless telephone base unit and the wireless telephone remote unit in the case in which the wireless telephone remote unit adapts the frame timing to the cellular station.

Also in the case in which the technique of the wireless telephone base unit having the conventional structure is applied to the cordless telephone 20 and the intercom 21, moreover, the cordless telephone base unit and the indoor apparatus are operated as master stations and transmit control data for synchronous establishment in specific slots, respectively. Also when the communication with the cordless telephone remote unit 20b is not carried out, therefore, two control data are transmitted. For this reason, there is a possibility that other wireless communication apparatuses for carrying out a wireless communication, for example, wireless communication apparatuses such as a wireless LAN and other cordless telephones which perform a data communication between personal computers by wireless might be disturbed.

### Disclosure of Invention

Therefore, it is an object of the invention to provide a wireless communication system having a high convenience and a communication method thereof in which master stations and slave stations can reliably carry out a communication and a disturbance to other wireless communication apparatuses can be reduced.

The invention provides a wireless communication apparatus comprising wireless communicating means for carrying out a wireless communication with a telephone base unit to be connected to a communication line and carrying out the wireless communication with a telephone remote unit for performing the wireless communication with the telephone base unit, communicating means connected to a communication remote unit, and control means for communicating with the telephone base unit and the telephone remote unit by using a communication frame including a first slot pair having a descending slot to be used for receiving a signal from the telephone base unit which is disposed earlier on a time basis and an ascending slot to be used for transmitting a signal to the telephone base unit which is disposed later on the time basis, and a second slot pair having a descending slot to be used for transmitting data to the telephone remote unit which is disposed earlier on the time basis and an ascending slot to be used for receiving data from the telephone remote unit which is disposed later on the time basis.

By utilizing a communication frame including a first slot pair having a descending slot to be used for receiving a signal from the telephone base unit which is disposed earlier on a time basis and having an ascending slot to be used for transmitting a signal to the telephone base unit which is disposed later on the time basis, and a second slot pair having a descending slot to be used for transmitting data to the telephone remote unit which is disposed earlier on the time basis and having an ascending slot to be used for receiving data from the telephone remote unit which is disposed later on the time basis, consequently, the first slot pair is used for the communication with the telephone base unit and the second slot pair is used for the communication with the telephone remote unit so that the wireless communication apparatus is set onto a slave side with only a relationship with the telephone base unit. In the case in which the telephone remote unit is shared to be a remote unit of the telephone base unit and the wireless communication apparatus, therefore, it is possible to transmit data from the communication remote unit to the telephone remote unit without a competition with the telephone base unit.

A first aspect of the invention is directed to a wireless communication apparatus as defined in claim 1. with the telephone base unit;
communicating means connected to a communication remote unit; and
control means for communicating with the telephone base unit and the telephone remote unit by using a communication frame including a first slot pair having a descending slot to be used for receiving a signal from the telephone base unit which is disposed earlier on a time basis and an ascending slot to be used for transmitting a signal to the telephone base unit which is disposed later on the time basis, and a second slot pair having a descending slot to be used for transmitting data to the telephone remote unit which is disposed earlier on the time basis and an ascending slot to be used for receiving data from the telephone remote unit which is disposed later on the time basis.

By utilizing a communication frame including a first slot pair having a descending slot to be used for receiving a signal from the telephone base unit which is disposed earlier on a time basis and an ascending slot to be used for transmitting a signal to the telephone base unit which is disposed later on the time basis, and a second slot pair having a descending slot to be used for transmitting data to the telephone remote unit which is disposed earlier on the time basis and an ascending slot to be used for receiving data from the telephone remote unit which is disposed later on the time basis, consequently, the first slot pair is used for the communication with the telephone base unit and the second slot pair is used for the communication with the telephone remote unit, and the wireless communication apparatus is set onto the slave side in only a relationship with the telephone base unit. In the case in which the telephone remote unit is shared to be the remote unit of the telephone base unit and the wireless communication apparatus, therefore, it is possible to transmit the data from the communication remote unit to the telephone remote unit without a competition with the telephone base unit.

A second aspect of the invention is characterized in that the control means synchronizes a transmission start timing of the communication frame with a synchronizing signal received from the telephone base unit through the descending slot of the first slot pair, thereby carrying out a communication.

By synchronizing a transmission start timing of the communication frame with a synchronizing signal received from the telephone base unit through the descending slot of the first slot pair, thereby carrying out a communication, consequently, the telephone remote unit can perform the receipt in a state in which the descending slot of the first slot pair and that of the second slot pair are synchronized with each other. Thus, the receiving portion of the telephone remote unit can be simplified.

A third aspect of the invention is characterized in that the communication remote unit is an intercom remote unit having a call button, and the intercom remote unit transmits a call signal to the communicating means when the call button is pressed down.

Consequently, the communication remote unit is an intercom remote unit having a call button, and the intercom remote unit transmits a call signal to the communicating means when the call button is pressed down. When the call button is operated by the communication remote unit, therefore, the call signal can be caused to communicate with the wireless communication apparatus. Thus, it is apparent that the call button of the communication remote unit is operated by the wireless communication apparatus.

A fourth aspect of the invention is characterized in that the communication remote unit is an intercom remote unit having a call button, the intercom remote unit transmits a call signal to the communicating means when the call button is pressed down, and the control means transmits the call signal to the telephone remote unit through the descending slot of the second slot pair.

Consequently, the communication remote unit is an intercom remote unit having a call button, the intercom remote unit transmits a call signal to the communicating means when the call button is pressed down, and the control means transmits the call signal to the telephone remote unit through the descending slot of the second slot pair. When the call button is operated by the communication remote unit, therefore, the call signal can be caused to communicate with the telephone remote unit. Thus, it is apparent that the call button of the communication remote unit is operated by the telephone remote unit.

A fifth aspect of the invention is characterized in that the communication remote unit is an intercom remote unit having a call button, the intercom remote unit transmits a call signal to the communicating means when the call button is pressed down, and the control means transmits the call signal to the telephone base unit through the ascending slot of the first slot pair.

Consequently, the communication remote unit is an intercom remote unit having a call button, the intercom remote unit transmits a call signal to the communicating means when the call button is pressed down, and the control means transmits the call signal to the telephone base unit through the ascending slot of the first slot pair. When the call button is operated by the communication remote unit, therefore, the call signal can be caused to communicate with the telephone base unit. Thus, it is apparent that the call button of the communication remote unit is operated by the telephone remote unit.

A sixth aspect of the invention is characterized in that there is provided talking control means connected to a second communication line which is different from the communication line and serving to carry out talking through the second communication line; and
the control means uses a voice signal received from the talking control means in order to transmit the descending slot of the second slot pair to the telephone remote unit.

Consequently, there is provided talking control means connected to a second communication line which is different from the communication line and serving to carry out talking through the second communication line, and the control means uses a voice signal received from the talking control means in order to transmit the descending slot of the second slot pair to the telephone remote unit. Thus, the telephone remote unit can carry out the talking through the second communication line. Therefore, the telephone remote unit can carry out the talking by using the second communication line in addition to the communication line.

A seventh aspect of the invention is characterized in that the talking control means transmits an incoming call signal through the descending slot of the second slot pair when detecting an incoming call sent from the second communication line.

Consequently, the talking control means transmits an incoming call signal through the descending slot of the second slot pair when detecting an incoming call sent from the second communication line. Therefore, the communication between the telephone base unit and the telephone remote unit is not competed with the incoming call sent from the second communication line. Thus, the telephone remote unit can receive the incoming call from the second communication line while carrying out the communication by using the communication line.

An eighth aspect of the invention is characterized in that the control means carries out a control to lessen a transmission frequency using the descending slot of the second slot pair with respect to a receipt of the synchronizing signal transmitted through the descending slot of the first slot pair.

Consequently, the control means carries out a control to lessen a transmission frequency using the descending slot of the second slot pair with respect to a receipt of the synchronizing signal transmitted through the descending slot of the first slot pair. Thus, it is possible to maintain the state in which the synchronization is taken by control data transferred from the telephone base unit and to transmit a descending signal in the second slot pair immediately when the transmission is required, that is, at time of a call or an incoming call. Therefore, it is possible to save a wireless frequency and resources for a communication time.

A ninth aspect of the invention is characterized in that the telephone remote unit is a plurality of telephone remote units, and the call signal transmitted through the descending slot of the second slot pair includes information for identifying the telephone remote unit, and the control means sets the information for identifying the telephone remote unit to have a predetermined value when calling the telephone remote units at the same time.

Consequently, the telephone remote unit is a plurality of telephone remote units, and the call signal transmitted through the descending slot of the second slot pair includes information for identifying the telephone remote unit, and the control means sets the information for identifying the telephone remote unit to have a predetermined value when calling the telephone remote units at the same time. Thus, it is possible to decide that the telephone remote unit is called when the information for identification which is received by the telephone remote unit has the predetermined value. Therefore, it is possible to implement the broadcast of a plurality of telephone remote units.

A tenth aspect of the invention is characterized in that the call signal transmitted through the ascending slot of the first slot pair includes information for identifying the telephone base unit, and the control means sets the information for identifying the telephone base unit to have a predetermined value when calling the remote units and the telephone base unit at the same time.

Consequently, the call signal transmitted through the ascending slot of the first slot pair includes information for identifying the telephone base unit, and the control means sets the information for identifying the telephone base unit to have a predetermined value when calling the remote units and the telephone base unit at the same time. Thus, it is possible to decide that the telephone remote units and the telephone base unit are called when the information for identification which is received by the telephone remote unit and the telephone base unit have the predetermined values. Therefore, it is possible to implement the broadcast of the remote units and the base unit.

An eleventh aspect of the invention is characterized in that the intercom remote unit includes a camera for picking up an image, the wireless remote unit includes a display portion, and a call signal transmitted through the descending slot of the second slot pair includes image information picked up by the outdoor apparatus and the telephone remote unit displays the image.

Consequently, the intercom remote unit includes a camera for picking up an image, the wireless remote unit includes a display portion, and a call signal transmitted through the descending slot of the second slot pair includes image information picked up by the intercom remote unit. Therefore, the telephone remote unit can receive the call signal from the telephone base unit, and furthermore, can display the image of the outdoor apparatus on the display portion.

A twelfth aspect of the invention is characterized in that the intercom remote unit includes a camera for picking up an image, the wireless base unit includes a display portion, and a call signal transmitted through the ascending slot of the first slot pair includes image information picked up by the intercom remote unit and the telephone base unit displays the image.

Consequently, the intercom remote unit includes a camera for picking up an image, the wireless base unit includes a display portion, and a call signal transmitted through the ascending slot of the first slot pair includes image information picked up by the intercom remote unit. Therefore, the telephone base unit can receive the call signal from the telephone base unit, and furthermore, can display the image of the outdoor apparatus on the display portion.

### Brief Description of Drawings

Fig. 1 is a view showing a structure of a wireless communication system according to an embodiment of the invention,
Fig. 2 is a diagram for explaining a structure of an intercom according to the embodiment of the invention,
Fig. 3 is a diagram for explaining a structure of a cordless telephone base unit of a cordless telephone according to the embodiment of the invention,
Fig. 4 is a diagram for explaining a structure of a cordless telephone remote unit of the cordless telephone according to the embodiment of the invention,
Figs. 5(A) and 5(B) are diagrams for explaining a format of packet data,
Fig. 6 is a diagram for explaining the states of a transmission slot and a receipt slot in the execution of a communication in the wireless communication system according to the embodiment of the invention,
Fig. 7 is a diagram for explaining the states of the transmission slot and the receipt slot in the execution of the communication in the wireless communication system according to the embodiment of the invention,
Fig. 8 is a diagram for explaining the states of the transmission slot and the receipt slot in the execution of the communication in the wireless communication system according to the embodiment of the invention,
Fig. 9 is a diagram for explaining the states of the transmission slot and the receipt slot in the execution of the communication in the wireless communication system according to the embodiment of the invention,
Fig. 10 is a diagram for explaining the states of the transmission slot and the receipt slot in the execution of the communication in the wireless communication system according to the embodiment of the invention,
Fig. 11 is a diagram for explaining the states of the transmission slot and the receipt slot in the execution of the communication in the wireless communication system according to the embodiment of the invention,
Fig. 12 is a diagram for explaining the states of the transmission slot and the receipt slot in the execution of the communication in the wireless communication system according to the embodiment of the invention,
Fig. 13 is a diagram for explaining the states of the transmission slot and the receipt slot in the execution of the communication in the wireless communication system according to the embodiment of the invention,
Fig. 14 is a view showing the case in which a wireless relay device is provided in the wireless communication system according to the embodiment of the invention,
Fig. 15 is a diagram for explaining the states of a transmission slot and a receipt slot in the execution of a communication in the wireless communication system comprising the wireless relay device according to the embodiment of the invention,
Fig. 16 is a diagram showing a hardware structure of an indoor apparatus in the wireless communication system according to the embodiment of the invention,
Fig. 17 is a diagram showing a hardware structure of the cordless telephone remote unit in the wireless communication system according to the embodiment of the invention,
Fig. 18 is a view showing an appearance of an outdoor apparatus in the wireless communication system according to the embodiment of the invention,
Fig. 19 is a view showing an appearance of the indoor apparatus in the wireless communication system according to the embodiment of the invention,
Fig. 20 is a view showing an appearance of the outdoor apparatus in the wireless communication system according to the embodiment of the invention,
Fig. 21 is a view showing an appearance of another cordless telephone remote unit in the wireless communication system according to the embodiment of the invention,
Fig. 22 is a view showing an appearance of the cordless telephone base unit in the wireless communication system according to the embodiment of the invention, and
Fig. 23 is a view showing a structure comprising a cordless telephone and an intercom.

### Best Mode for Carrying Out the Invention

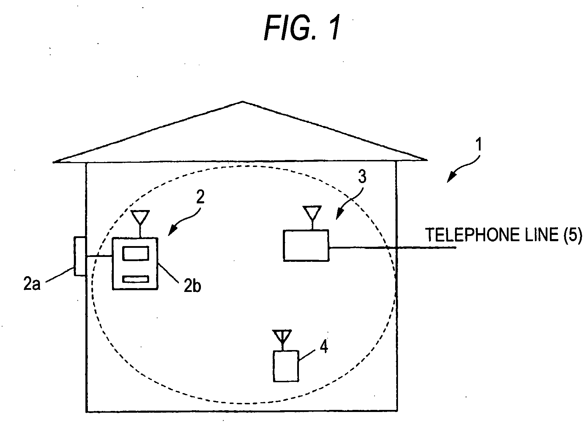

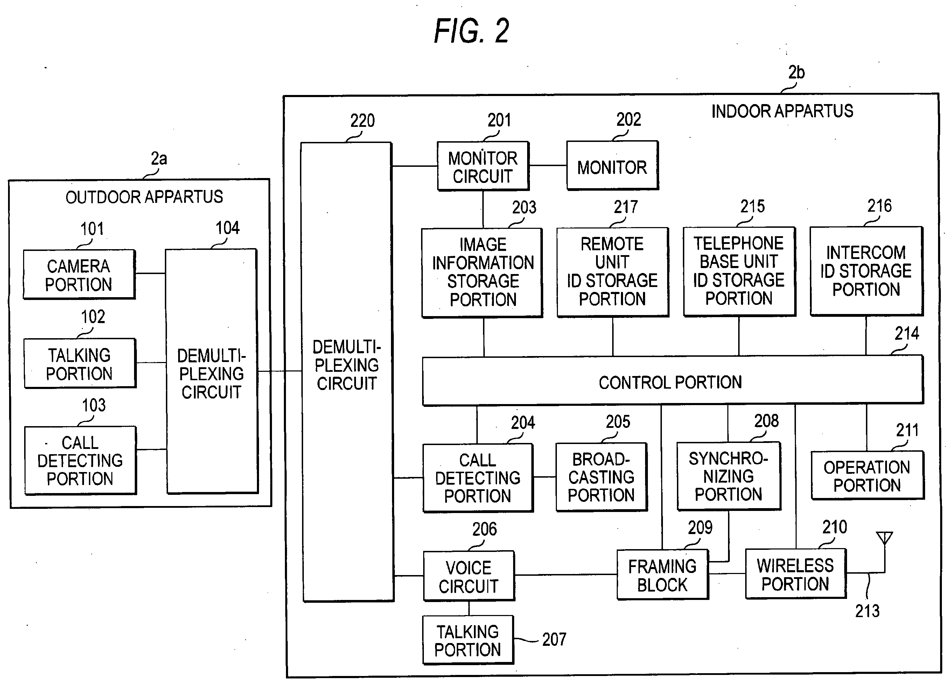

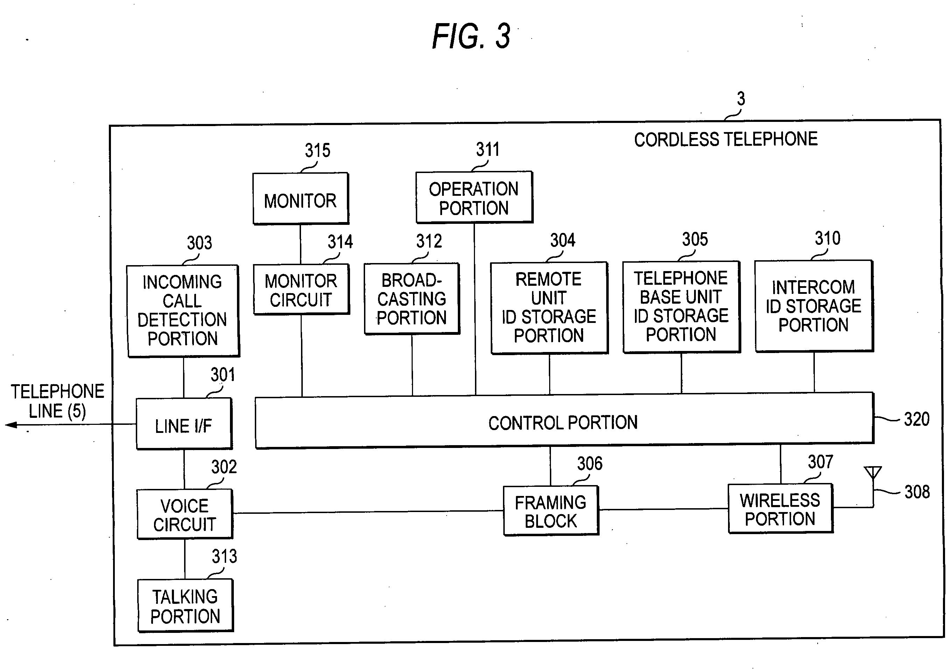

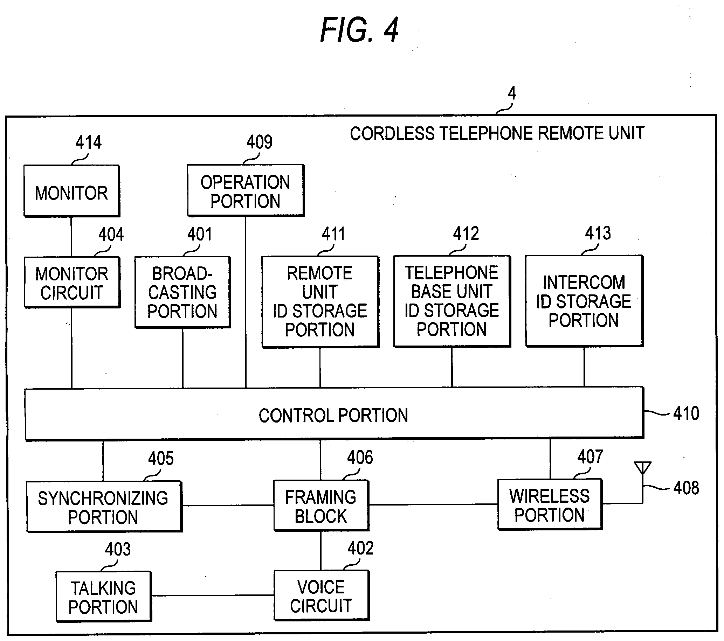

A structure of a wireless communication system according to an embodiment of the invention will be described with reference to Figs. 1 to 4. Fig. 1 is a view for explaining a structure of a wireless communication system according to the embodiment of the invention. Fig. 2 is a diagram for explaining a structure of an intercom according to the embodiment of the invention. Fig. 3 is a diagram for explaining a structure of a cordless telephone base unit of a cordless telephone according to the embodiment of the invention. Fig. 4 is a diagram for explaining a structure of a cordless telephone remote unit of the cordless telephone according to the embodiment of the invention.

As shown in Fig. 1, a wireless communication system 1 according to the embodiment of the invention comprises an intercom 2 to be operated as a sub master station, a cordless telephone base unit 3 connected to a telephone line 5 which is to be operated as a main master station, and a cordless telephone remote unit 4 to be operated as a slave station. The intercom 2 is constituted by an outdoor apparatus 2a and an indoor apparatus 2b. Although only one cordless telephone remote unit 4 is shown in Fig. 1, a plurality of cordless telephone remote units 4 may be provided. In the wireless communication system 1 according to the embodiment, the cordless telephone base unit 3 serves as a main master station, the indoor apparatus 2b serves as a sub master station and the cordless telephone remote unit 4 serves as a slave station, and a communication is carried out by a wireless time division multiple access.

As shown in Fig. 2, the intercom 2 has the outdoor apparatus 2a and the indoor apparatus 2b connected by a cable. The outdoor apparatus 2a includes a camera portion 101 for picking up an image of a visitor, a talking portion 102 for talking to the visitor, a call detecting portion 103 for detecting a call by the visitor and transmitting a call request to the indoor apparatus 2b, and a demultiplexing circuit 104 for multiplexing or demultiplexing image data, voice data and a call request of the visitor whose image is picked up, thereby carrying out a communication with the indoor apparatus 2b.

The indoor apparatus 2b includes a monitor circuit 201, a monitor 202, an image information storage portion 203, a call detecting portion 204, a broadcasting portion 205, a voice circuit 206, a talking portion 207, a synchronizing portion 208, a framing block 209, a wireless portion 210, an operating portion 211, an antenna 213, a control portion 214, a telephone base unit ID storage portion 215, an intercom ID storage portion 216, a remote unit ID storage portion 217 and a demultiplexing circuit 220.

The monitor circuit 201 is connected to the demultiplexing circuit 220 and image data transferred from the outdoor apparatus 2a are displayed on the monitor 202.

The image information storage portion 203 stores the image data transferred from the outdoor apparatus 2a through the monitor circuit 201 and outputs the same image data to the control portion 214.

The call detecting portion 204 is connected to the demultiplexing circuit 220 and detects a call request from the call detecting portion 103 in the outdoor apparatus 2a to ring a chime of the broadcasting portion 205, thereby broadcasting the arrival of the visitor to a user and giving a notice to the control portion 214.

The voice circuit 206 is connected to the demultiplexing circuit 220 and has the function of converting a voice signal input from a microphone of the talking portion 207 into voice data and transmitting the voice data to the outdoor apparatus 2a, converting the voice data received through the outdoor apparatus 2a into a voice signal and thus making a ring through a speaker of the talking portion 207, and relaying the voice data to the outdoor apparatus 2a when communicating with the cordless telephone remote unit 4.

The synchronizing portion 208 is connected to the framing block 209 and the control portion 214 and carries out a synchronization in a preamble and a synchronization bit pattern on the head of a packet.

The framing block 209 is connected to the voice circuit 206, the wireless portion 210 and the control portion 214 and has the function of extracting a control data field and an information field from demodulation data based on a synchronizing signal and outputting them to the control portion 214 or the voice circuit 206.

The wireless portion 210 carries out a modulation and a demodulation for performing a communication through the time division multiple access and transmits/receives them through the antenna 213.

The operating portion 211 includes a key to be pressed down in talking to the visitor.

The control portion 214 serves to generally control the outdoor apparatus 2a and the indoor apparatus 2b.

The telephone base unit ID storage portion 215 registers an ID to be identification information of the cordless telephone base unit 3 to be the main master station, the intercom ID storage portion 216 registers an ID of the self-apparatus which serves as the sub master station, and the remote unit ID storage portion 217 registers an ID to be identification information of the wireless remote unit to be operated as the slave station which is registered in the intercom 2, and is connected to freely carry out reading from the control portion 214.

Next, the cordless telephone base unit 3 will be described in detail with reference to Fig. 3.

As shown in Fig. 3, the cordless telephone base unit 3 includes a line interface portion 301, a voice circuit 302, an incoming call detecting portion 303, a remote unit ID storage portion 304, a telephone base unit ID storage portion 305, an intercom ID storage portion 310, a framing block 306, a wireless portion 307, an antenna 308, an operating portion 311, a broadcasting portion 312, a talking portion 313, a monitor circuit 314, a monitor 315 and a control portion 320.

The line interface portion 301 is connected to the telephone line 5, and outputs a signal to the incoming call detecting portion 303 and outputs a signal to the voice circuit 302. Moreover, an analog voice signal is sent from the voice circuit 302 to the telephone line 5.

The voice circuit 302 is connected to the framing block 306 and the talking portion 313, and converts a voice signal input through a microphone of the talking portion 313 into voice data and outputs the same voice data to the framing block 306, and converts the voice data input from the framing block 306 into a voice signal and makes a ring through a speaker of the talking portion 313.

The incoming call detecting portion 303 is connected to the line interface portion 301 and the control portion 320, and detects an incoming call through a voice signal sent from the telephone line 5 and gives a notice to the control portion 320.

The remote unit ID storage portion 304 registers an ID of the cordless telephone remote unit 4 to be the slave station which serves as a communicating partner, the intercom ID storage portion 310 registers an ID of the intercom 2 to be the sub master station which is operated as the slave station to be the communicating partner, and the telephone base unit ID storage portion 305 registers an ID of the self-apparatus which serves as the main master station and is connected to freely carry out reading from the control portion 320.

The framing block 306 is connected to the voice circuit 302, the wireless portion 307 and the control portion 320, and has the function of extracting a control data field and an information field from demodulation data based on a synchronizing signal and outputting the same fields to the control portion 320 or the voice circuit 302.

The wireless portion 307 carries out a modulation and a demodulation for performing a communication through the time division multiple access and transmits/receives the data through the antenna 308.

The operating portion 311 includes function keys such as a number key to be used when inputting a transmitting destination telephone number, a key for carrying out on-hook/off-hook, and a key for redialing.

The broadcasting portion 312 is connected to the control portion 320, and broadcasts an incoming call from the telephone line 5 and a notice of a visitor which is given from the intercom 2 through a notice given from the control portion 320.

The monitor circuit 314 is connected to the control portion 320 and displays, on the monitor 315, image data sent from the intercom 2.

The control portion 320 serves to generally control the cordless telephone base unit 3.

Next, the cordless telephone remote unit 4 will be described in detail with reference to Fig. 4. As shown in Fig. 4, the cordless telephone remote unit 4 includes a broadcasting portion 401, a voice circuit 402, a talking portion 403, a monitor circuit 404, a synchronizing portion 405, a framing block 406, a wireless portion 407, an antenna 408, an operating portion 409, a control portion 410, a remote unit ID storage portion 411, a telephone base unit ID storage portion 412, an intercom ID storage portion 413, and a monitor 414.

The broadcasting portion 401 is connected to the control portion 410, and broadcasts an incoming call from the telephone line 5 and a notice of a visitor which is given from the intercom 2 through a notice given from the control portion 410.

The voice circuit 402 is connected to the framing block 406 and the talking portion 403, and converts a voice signal input through a microphone of the talking portion 403 into voice data and outputs the same voice data to the framing block 406, and converts the voice data input from the control portion 410 or the framing block 406 into a voice signal and makes a ring through a speaker of the talking portion 403.

The monitor circuit 404 is connected to the control portion 410 and displays, on the monitor 414, image data sent from the intercom 2.

The synchronizing portion 405 is connected to the framing block 406 and the control portion 410 and carries out a synchronization in a preamble and a synchronization bit pattern on the head of a packet.

The framing block 406 is connected to the voice circuit 402, the wireless portion 407 and the control portion 410 and has the function of extracting a control data field and an information field from demodulation data based on a synchronizing signal and outputting them to the control portion 320 or the voice circuit 402.

The wireless portion 407 carries out a modulation and a demodulation for performing a communication through the time division multiple access and transmits/receives the data through the antenna 408.

The operating portion 409 includes function keys such as a number key to be used when inputting a transmitting destination telephone number, a key for carrying out on-hook/off-hook, and a key for redialing.

The control portion 410 serves to generally control the cordless telephone remote unit 4.

The remote unit ID storage portion 411 registers an ID of the self-apparatus to be the slave station. The telephone base unit ID storage portion 412 registers an ID of the cordless telephone base unit 3 to be the main master station. The intercom ID storage portion 413 registers an ID of the intercom 2 to be the sub master station. The remote unit ID storage portion 411, the telephone base unit ID storage portion 412 and the intercom ID storage portion 413 are connected to freely carry out reading from the control portion 410.

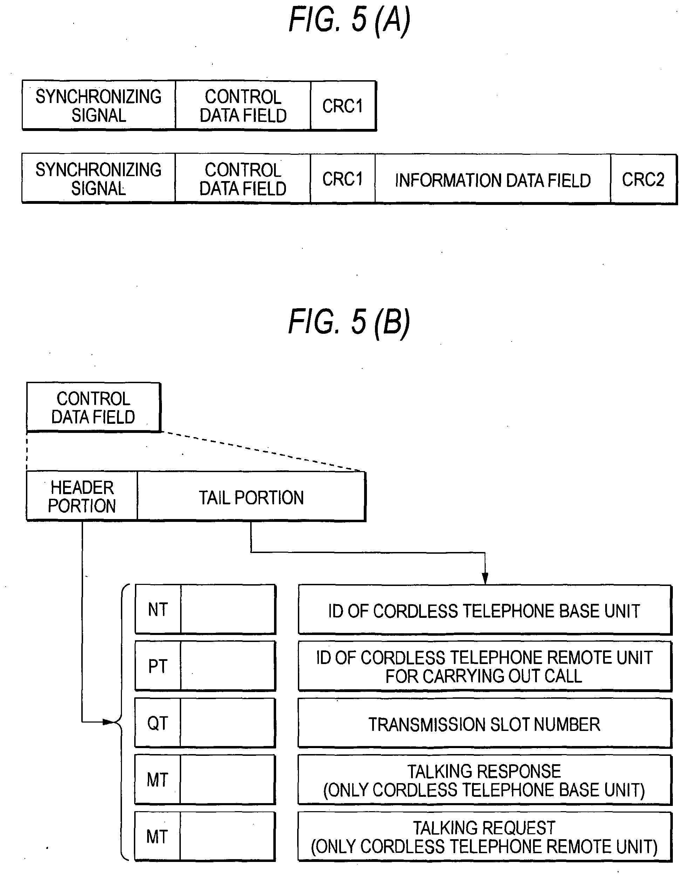

With reference to Figs. 5(A) and 5(B), description will be given to a format of packet data obtained when the indoor apparatus 2b, the cordless telephone base unit 3 and the cordless telephone remote unit 4 in the wireless communication system 1 according to the embodiment of the invention which is constituted as described above carries out a communication by the time division multiple access. Figs. 5(A) and 5(B) are diagrams for explaining the format of the packet data.

As shown in Fig. 5(A), the data packet includes a packet to be used when transmitting control data and a packet to be used when transmitting voice data and image data. Any of the packet data also have a synchronizing signal and a control data field, and a field of a CRC (Cyclic Redundancy Check) 1 in which a check code of the control data field is stored.

The synchronizing signal is constituted by a preamble and a synchronization bit pattern, and serves to take a synchronization with a communication source. The control data field stores a message therein.

Moreover, the voice data and the image data are stored in the information field and a check code of the information field is stored in a CRC 2.

As shown in Fig. 5(B), the control data field is constituted by a header portion and a tail portion, and a message is stored in the header portion. In the tail portion, contents to be stored are varied depending on the contents of a message to be stored in the header portion. Referring to an NT message, for example, an ID of a transmitting source is stored. In other words, the NT message is used by the cordless telephone base unit 3 and the indoor apparatus 2b. The sub master station and the slave station which receive the NT message transmitted from the main master station can recognize that the main master station uses the slot. Moreover, the slave station receiving the NT message transmitted from the sub master station can recognize that the sub master station uses the slot.

Furthermore, an ID of the cordless telephone remote unit 4 for carrying out a call is stored in a PT message. In the case in which an incoming call is given from the telephone line 5, an ID of the cordless telephone remote unit 4 to which the cordless telephone base unit 3 gives a notice of the incoming call is stored. In the case in which a visitor arrives, the ID of the cordless telephone remote unit 4 for giving a notice of a call from the indoor apparatus 2b is stored. In the case in which all of the remote units are called at the same time, moreover, a special ID indicative of a call for all of them (for example, an ID of ALLO) is stored.

A QT message is used when giving a notice of a transmitting slot to a communicating partner. The sub master station and the slave station which receive the QT message transmitted from the main master station can recognize any of the slots in a frame through which the control signal is transmitted, and can synchronize the frame and the slot with the main master station.

An MT message is used by the cordless telephone base unit 3 and the indoor apparatus 2b and is used by the cordless telephone remote unit 4. When an incoming call is given from the telephone line 5 and the PT message is transmitted from the cordless telephone base unit 3 to the cordless telephone remote unit 4, a talking request based on the MT message is transmitted from the cordless telephone remote unit 4 subjected to off-hook, and a talking response based on the MT message is transmitted as a confirmation response from the cordless telephone base unit 3. When the incoming call is given from the outdoor apparatus 2a and the PT message is transmitted from the indoor apparatus 2b to the cordless telephone remote unit 4, similarly, a talking request based on the MT message is transmitted from the cordless telephone remote unit 4 subjected to the off-hook and a talking response based on the MT message is transmitted as a confirmation response from the indoor apparatus 2b.

With reference to Figs. 1 to 4, next, description will be given to an operation to be carried out when the indoor apparatus 2b, the cordless telephone base unit 3 and the cordless telephone remote unit 4 perform a communication by using the packet data.

In the following description, a slot in which the cordless telephone base unit 3 to be operated as the main master station transmits, as control data, a control signal to be a reference of a time division multiple time will be referred to as a main synchronization slot, and a slot in which the indoor apparatus 2b to be operated as the sub master station transmits, as control data, a control signal to be the reference of the time division multiple time will be referred to as a sub synchronization slot. In the embodiment, moreover, there will be described an example of the case in which a slot for transmitting a wireless signal when the sub master station is operated as the master station and when the main master station is operated and a slot for transmitting a wireless signal when the sub master station is operated as a slave station and when the slave station is operated are separated from each other when they carry out a time division multiplex. The slot for transmitting a wireless signal when the sub master station is operated as the master station and when the main master station is operated will be referred to as a master station transmission slot or a slave station receipt slot, and the slot for transmitting a wireless signal when the sub master station is operated as a slave station and when the slave station is operated will be referred to as a slave station transmission slot or a master station receipt slot. In particular, a slot carrying out a receiving operation to receive a request for a communication from the slave station in a state in which the master station waits for the communication request given from the slave station will be referred to as a waiting slot.

First of all, description will be given to an operation of the cordless telephone base unit 3. As shown in Fig. 3, when a power supply is turned on, the control portion 320 determines a timing of a frame/slot using the time division multiple access in a self-timing and selects a main synchronization slot from an optional one of predetermined master station transmission slots in the wireless communication system to start a transmission of control data. The control portion 320 outputs, to the framing block 306, a transmission slot number and an ID of the self-apparatus which is registered in the telephone base unit ID storage portion 305 in a transmission timing of the control data. In the framing block 306, a synchronizing signal is added to the transmission slot number and the ID and is thus output to the wireless portion 307. Consequently, the control data are transmitted through the antenna 308. The control portion 320 carries out such a control as to perform a transition to an idle state for waiting for the receipt of a talking request sent from the cordless telephone remote unit 4 in a slot excluding a slot corresponding to a main synchronization slot in predetermined slave station transmission slots in the wireless communication system, that is, a waiting slot. The control portion 320 controls the wireless portion 307 to carry out a receiving operation in the waiting slot. Demodulation data received and demodulated in the waiting slot are output to the framing block 306, and the framing block 306 extracts the control data field and the CRC 1 from the demodulation data input in each waiting slot based on a synchronizing signal, and outputs the control data received in the control data field to the control portion 320 if the receiving signal is correct. The control portion 320 carries out such a control as to perform an operation in accordance with the received control data, and starts an operation for starting a communication with the slave station or the sub master station of the transmitting source if the received control data indicate a communication request, for example.

Next, description will be given to an operation of the indoor apparatus 2b. As shown in Fig. 2, first of all, the control portion 214 sets the wireless portion 210 into a continuous receiving state and the main master station starts a synchronous acquiring operation of the control data to be transmitted by the main master station. Then, packet data received and demodulated by the wireless portion 210 are transferred to the framing block 209.

The framing block 209 extracts a control data field based on the synchronizing signal from the demodulated packet data and outputs an ID of a transmitting source and a receiving slot number to the control portion 214 based on the received data of the control data field.

When the received ID is coincident with the ID registered in the telephone base unit ID storage portion 215, the control portion 214 sets a slot receiving the ID registered in the telephone base unit ID storage portion 215 to be a main synchronization slot and the cordless telephone base unit 3 subsequently carries out a receipt in the same timing. Upon receipt of the control data for giving a notice of a slot transmitting a control signal, the synchronization of the frame and the slot with the cordless telephone base unit 3 (the main master station) is established. For example, when a notice of the fact that the slot transmitting the control signal from the cordless telephone base unit 3 is "1" is given, the frame timing is determined in such a manner that the slot receiving the control data (the main synchronization slot) is set to be the slot 1. More specifically, the indoor apparatus 2b carries out a control as the slave station of the main master station in the main synchronization slot after the synchronization of the frame and the slot with the cordless telephone base unit 3 is established, and the main synchronization slot in which the cordless telephone base unit 3 transmits a control signal in the transmission slots on the master station side predetermined in the wireless communication system is operated as a receipt slot. One of the slots excluding the main synchronization slot for carrying out an operation as the slave station is selected as a sub synchronization slot from the transmission slots on the predetermined master station side in the wireless communication system, and the control data of the sub master station are transmitted. In the embodiment, a next slot to the main synchronization slot to be transmitted by the cordless telephone base unit 3 is set to be the sub synchronization slot of the indoor apparatus 2b.

The control portion 214 carries out a control for a transition to an idle state in which a receipt of a talking request from the cordless telephone remote unit 4 is waited by setting, as a waiting slot, slots excluding slots corresponding to the main synchronization slot and the sub synchronization slot in the transmission slots on the slave station (the cordless telephone remote unit 4) side predetermined in the wireless communication system.

When the transition to the idle state is carried out, the control signal transmitted from the cordless telephone base unit 3 is received in the main synchronization slot. Consequently, the control of the slave station, that is, the maintenance of the synchronization is carried out. In the timing of the main synchronization slot, the control portion 214 controls the wireless portion 210 to receive the control signal of the cordless telephone base unit 3 and the received demodulation data are output to the framing block 209. The framing block 209 extracts a control data field based on a synchronizing signal from the demodulated packet data and outputs the received data of the control data field to the control portion 214, and furthermore, gives a notice of a timing detecting the synchronizing signal to the synchronizing portion 208. The synchronizing portion 208 outputs a timing adjustment signal of a frame and a slot to the framing block 209 in such a manner that the timing detecting the synchronizing signal is set to be a predetermined timing. In an example of an operation of a timing adjustment carried out by the synchronizing portion 208, a cycle of the timing detecting the synchronizing signal given in the main synchronization slot is counted and the timing adjustment signal of the frame and the slot is output to the framing block 209 corresponding to a shift of a detecting cycle of the synchronizing signal and a predetermined cycle (frame cycle), for instance. At this time, it is desirable that the cycle of the detecting timing of the synchronizing signal should be counted on a unit of a time which is as short as possible in the synchronizing portion 208. The time unit is set in such a manner that a transmission jitter generated by the timing adjustment of the frame and the slot does not influence a communication with the main master station and the slave station. For example, the detecting cycle of the synchronizing signal is timed in a shorter time (for example, a time unit of 1/10 bit) than a time required for a 1-bit transmission determined by a communication speed (bit rate) for a communication through the system and the timing adjustment signal of the frame and the slot is generated. Moreover, the timing adjustment signal is output in a time at which the sub master station does not carry out a transmission/receipt so that the timings of the frame and the slot are adjusted. For example, the timings of the frame and the slot are adjusted in a guard time to be a time required for carrying out a transmission or a receipt of a next slot after the receipt of the main synchronization slot is completed, that is, a transmission prohibiting time provided at the end of each slot in order to compensate for a delay of a receipt timing which is caused by a propagation delay in the execution of a time division communication.

Furthermore, the control portion 214 carries out such a control as to perform a transition to an idle state for waiting for the receipt of a talking request sent from the cordless telephone remote unit 4 in a slot excluding slots corresponding to the main synchronization slot and the sub synchronization slot in predetermined slave station transmission slots in the wireless communication system, that is, a waiting slot. The control portion 214 controls the wireless portion 210 to carry out a receiving operation in the waiting slot. Demodulation data received and demodulated in the waiting slot are output to the framing block 209, and the framing block 209 extracts the control data field and the CRC 1 from the demodulation data input in each waiting slot based on a synchronizing signal, and outputs the control data received in the control data field to the control portion 214 if the receiving signal is correct. Then, the control portion 214 carries out such a control as to perform an operation in accordance with the received control data, and starts an operation for starting a communication with the slave station of the transmitting source if the received control data indicate a communication request, for example.

Finally, description will be given to an operation of the cordless telephone remote unit 4. As shown in Fig. 4, first of all, the control portion 410 searches for the control data of the cordless telephone base unit 3 which are stored in the telephone base unit ID storage portion 412 in a continuous receipt, receives the control data to give a notice of a transmission slot of a control slot transmitted by the cordless telephone base unit 3 which are stored in the telephone base unit ID storage portion 412, and establishes the synchronization of the cordless telephone base unit 3 with the frame/slot in the time division multiple access in the same manner as the indoor apparatus 2b. After the establishment of the synchronization, in the main synchronization slot, a control signal transmitted from the cordless telephone base unit 3 is received to maintain the synchronization. In the timing of the main synchronization slot, the control portion 410 controls the wireless portion 407 to receive the control signal of the cordless telephone base unit 3 so that the received demodulation data are output to the framing block 406. The framing block 406 extracts a control data field based on a synchronizing signal from the demodulated packet data and outputs the received data of the control data field to the control portion 410, and furthermore, gives a notice of the timing detecting the synchronizing signal to the synchronizing portion 405. The synchronizing portion 405 outputs the timing adjustment signal of the frame and the slot to the framing block 406 in such a manner that the timing detecting the synchronizing signal is set to be a predetermined timing, and adjusts the timings of the frame and the slot based on the timing adjustment signal in the framing block 406. The cordless telephone remote unit 4 receives the control signal transmitted from the cordless telephone base unit 3. Consequently, the operations of the synchronizing portion 405 and the framing block 406 in the execution of the maintenance of the synchronization are the same as the operation of the indoor apparatus 2b and detailed description will be omitted.

Moreover, the control portion 410 carries out such a control as to receive the control data of the indoor apparatus 2b in a master station transmission slot (a slave station receipt slot) other than the main synchronization slot for receiving the control data of the cordless telephone base unit 3 after the synchronization with the cordless telephone base unit 3 is established. More specifically, the control portion 410 controls the wireless portion 407 so as to carry out a receipt in a master station transmission slot (a slave station receipt slot) so that the received demodulation data are output to the framing block 406. The framing block 406 extracts a control data field based on a synchronizing signal from the demodulated packet data and outputs the received data of the control data field to the control portion 410. Upon receipt of the control data of the indoor apparatus 2b which are coincident with the ID stored in the intercom ID storage portion 413, the control portion 410 stops the receipt of slots other than the main synchronization slot for receiving the control data of the cordless telephone base unit 3 and the sub synchronization slot for receiving the control data of the indoor apparatus 2b and a waiting state is then brought.

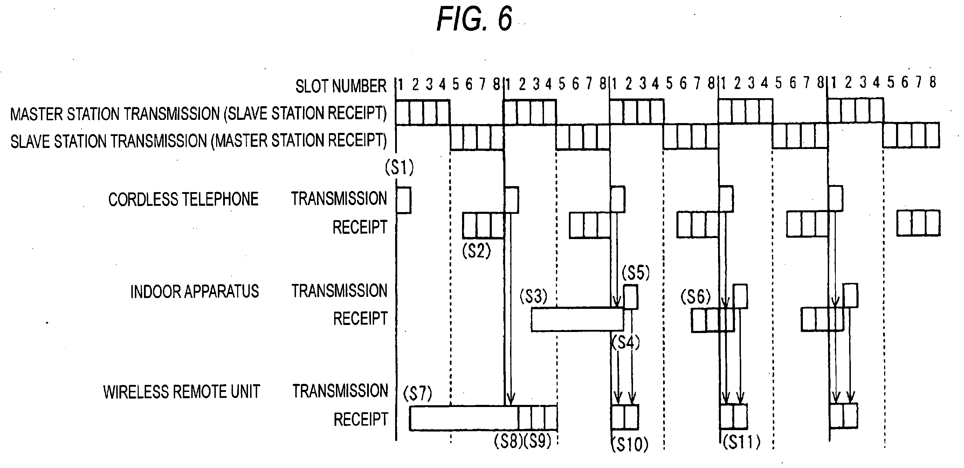

With reference to Figs. 6 to 11, next, description will be given to the states of the transmission slot and the receipt slot which are brought when the indoor apparatus 2b, the cordless telephone base unit 3 and the cordless telephone remote unit 4 carry out a communication. Figs. 6 to 11 are diagrams for explaining the states of the transmission slot and the receipt slot which are brought when the communication is carried out in the wireless communication system according to the embodiment of the invention.

As shown in Fig. 6, in the example, there is a slot arrangement having a time division multiplex in which one frame is constituted by transmission slots on the master station side predetermined in the wireless communication system, that is, slots 1 to 4, and is similarly constituted by transmission slots on the slave station side, that is, slots 5 to 8. Referring to the time slot of the wireless communication system 1, the transmission slots are constituted by four slots and the receipt slots corresponding to the transmission slots are constituted by four slots.

First of all, when the power supply is turned on, the cordless telephone base unit 3 determines the timing of a frame/slot using the time division multiple access in a self-timing and selects an optional one of the transmission slots on the master station side which are predetermined in the wireless communication system, thereby starting the transmission of the control data (S1). Then, the receipt slots on the master station excluding the receipt slot on the master station corresponding to the slot for transmitting a control signal, that is, the waiting slots are started to be received (S2). Fig. 6 shows an example in which the cordless telephone base unit 3 selects the slot 1 to start the transmission of the control data, and the slot 1 for transmitting the control data is set to be the main synchronization slot and the slots 6 to 8 are set to be the waiting slots.

Based on the control data transmitted in the main synchronization slot, the synchronization of the indoor apparatus 2b is established. More specifically, the indoor apparatus 2b first starts a continuous receipt (S3) and stops the continuous receipt upon receipt of the control signal transmitted from the cordless telephone base unit 3, and establishes the synchronization of the frame and the slot with the cordless telephone base unit 3 based on information such as a slot number included in the control signal and starts the operation of the slave station for receiving the control signal of the cordless telephone base unit 3 in the main synchronization slot (slot 1) (S4). Then, any of the master station transmission slots other than the synchronization slot which transmits the control signal is selected to start the transmission of the control signal (S5). Thereafter, the master station receipt slots excluding the master station receipt slots corresponding to the main synchronization slot to be operated as the slave station and the sub synchronization slot for transmitting the control signal, that is, the waiting slots are started to be received (S6). Fig. 6 shows an example in which the indoor apparatus 2b selects the slot 2 and starts the transmission of the control data. The slot 2 for transmitting the control data is set to be the sub synchronization slot and the slots 7 and 8 are set to be the waiting slots.

Based on the control data transmitted in the main synchronization slot, similarly, the synchronization of the cordless telephone remote unit 4 is established. More specifically, the cordless telephone remote unit 4 first starts a continuous receipt (S7) and stops the continuous receipt upon receipt of the control signal transmitted from the cordless telephone base unit 3, and establishes the synchronization of the frame and the slot with the cordless telephone base unit 3 based on information such as a slot number included in the control signal (S8). Then, the master station transmission slot other than the main synchronization slot is started to be received corresponding to the timings of the frame and the slot (S9). When the control signal transmitted by the indoor apparatus 2b is received (S10), thereafter, the receipt of the slots other than the main synchronization slot and the sub synchronization slot is stopped so that the waiting state is brought (S11).

The transmission of the control data is carried out by the cordless telephone base unit 3 in the synchronization slot every slot 1 in each frame because of the slot for establishing the synchronization with the indoor apparatus 2b and the cordless telephone remote unit 4. However, the control data are transmitted by the indoor apparatus 2b in a broadcasting slot excluding the slot 2 in a first frame only when some control data are to be transmitted. The reason is as follows. Since the cordless telephone remote unit 4 and the indoor apparatus 2b establish the synchronization with the cordless telephone base unit 3 in the synchronization slot respectively, both the cordless telephone remote unit 4 and the indoor apparatus 2b are synchronized with each other. After transmitting the control data by setting the slot 2 in the first frame to be the broadcasting slot, accordingly, the indoor apparatus 2b carries out the transmission when a visitor arrives and the call detecting portion 103 detects a call and transmits a call request, for example.

Although the indoor apparatus 2b transmits the control data in the slot 2 of the first frame which is the broadcasting slot and then transmits the control data if any in the embodiment, it does not need to carry out the transmission. In that case, the receiving state is set in the receipt slots (from the slot 2 to the slot 4) excluding the synchronization slot by the cordless telephone remote unit 4, and any of the slots which transmits the control data from the indoor apparatus 2b is waited.

By previously determining a positional relationship between the synchronization slot and the broadcasting slot, moreover, the cordless telephone remote unit 4 can know a receipt slot of the broadcasting slot based on the receipt slot of the synchronization slot and it is sufficient that only the slot 2 is waited. Therefore, it is also possible to control the consumption of a battery. In the example according to the embodiment, if a next slot to the synchronization slot is determined to be the broadcasting slot, it is sufficient that the cordless telephone remote unit 4 waits for only the slot 2, for instance.

Moreover, the indoor apparatus 2b may transmit the control signal plural times. Consequently, the cordless telephone remote unit 4 can reliably receive the control signal of the indoor apparatus 2b, and it is sufficient that the cordless telephone remote unit 4 receives only a specific synchronization slot (the slot 2 in the example of Fig. 6) after receiving the control signal from the indoor apparatus 2b. Thus, it is also possible to control the consumption of the battery. At this time, the indoor apparatus 2b transmits the control signal every several frames. Consequently, it is also possible to decrease the number of the transmissions of the control signal and to reduce a disturbance to other wireless communication apparatuses.

Similarly, the indoor apparatus 2b can receive the slot to transmit the control signal prior to the transmission of the control signal, and can confirm that the other wireless communication apparatuses do not use the pertinent slot, and can transmit the control signal, that is, can alternately carry out the confirmation of the presence of an interference with the other wireless communication apparatuses and the transmission of the control signal and can transmit the control signal regularly or irregularly while reducing the disturbance to the other wireless communication apparatuses. In this case, the structure of the indoor apparatus 2b is implemented by providing receiving level detecting means for detecting a receiving level of the receiving signal in the indoor apparatus 2b shown in Fig. 2, for example. The receiving level detecting means is constituted by a circuit connected to the wireless portion 210 and serving to fetch a part of the signal received by the receiving circuit in the wireless portion 210, to carry out a detection and rectification and to output a DC output corresponding to a level of the receiving signal, and an analog/digital converting circuit for digitally converting the DC output corresponding to the level of the receiving signal. The control portion 214 controls the wireless portion 210 in order to carry out a receipt at a frequency at which the control signal is to be transmitted in the slot (the broadcasting slot) for transmitting the control signal when the control signal is to be transmitted, and reads a digital output corresponding to an output level of the receiving signal by means of the analog/digital converting circuit in first, middle and last timings of the broadcasting slot during the receipt of the broadcasting slot, for example. When the receiving level thus read is equal to or lower than a predetermined value, the control is carried out to transmit the control signal in a broadcasting slot in a next frame. In the case in which the receiving level thus read is higher than the predetermined value, moreover, the receipt in the broadcasting slot is continuously carried out to wait for the receiving level to be equal to or lower than the predetermined value and the control is carried out to transmit the control signal in the broadcasting slot. In case of a wireless communication system for receiving all of the transmission slots transmitted by the master station in the waiting state of the slave station, the sub master station may be operated to receive the other slots when the receiving level read in the slot to transmit the control signal is higher than the predetermined value, and to select the slot having the receiving level which is equal to or lower than the predetermined value and to transmit the control signal, and may receive all of the slots except for the synchronization slot transmitted by the master station, and may select any of the slots which has the lowest receiving level and may transmit the control signal.

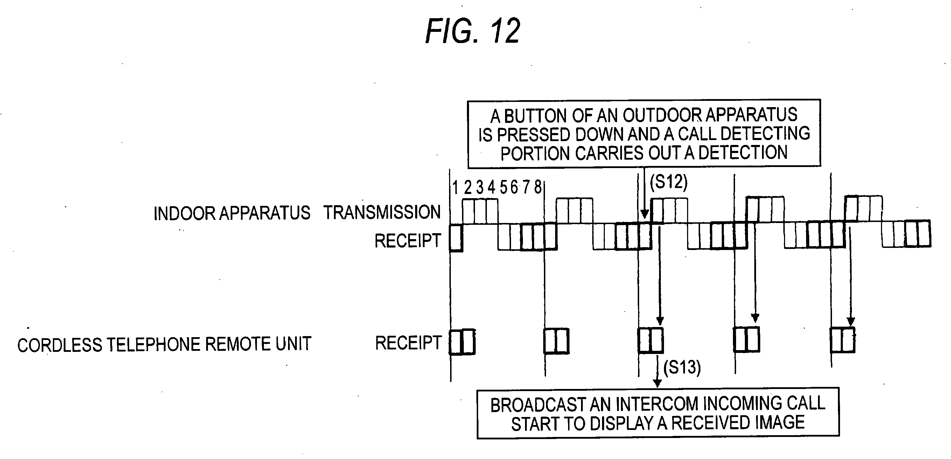

With reference to Fig. 12, description will be given to a state of a communication of the indoor apparatus 2b and the cordless telephone remote unit 4 which is brought when the call detecting portion 103 of the outdoor apparatus 2a detects a call of a visitor.

As shown in Fig. 12, the indoor apparatus 2b starts to transmit an intercom call request as control data together with image data to the cordless telephone remote unit 4 in the broadcasting slot of the slot 2 when the call detecting portion 103 of the outdoor apparatus 2a detects the call in a state in which nothing is transmitted in the slot 2 to be the broadcasting slot (S12).

The cordless telephone remote unit 4 displays the image data on the monitor 414, and at the same time, the broadcasting portion 401 gives information to a user (S 13).

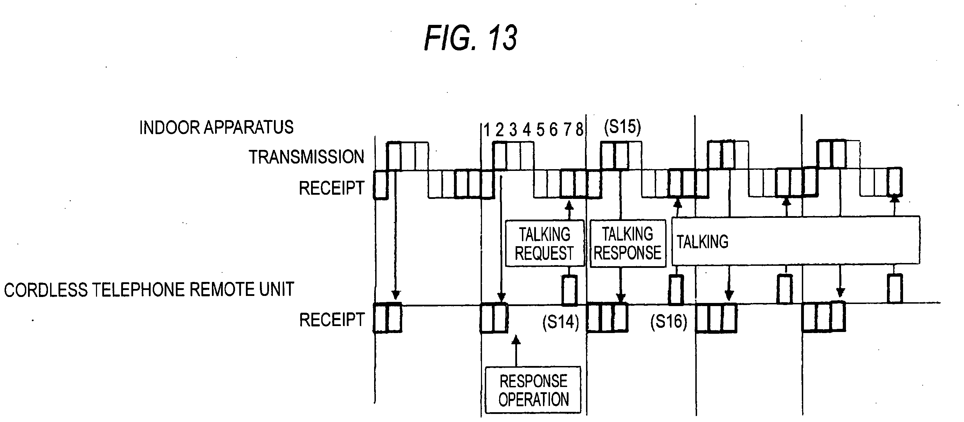

With reference to Fig. 13, next, description will be given to the state of the communication which is carried out when the cordless telephone remote unit 4 responds to an intercom incoming call notice given from the indoor apparatus 2b.

As shown in Fig. 13, when the call request is given from the indoor apparatus 2b to the cordless telephone remote unit 4 so that the user causes the cordless telephone remote unit 4 to carry out a response operation, a talking request is transmitted to the indoor apparatus 2b and a receipt slot corresponding to the slot transmitting the talking request is started to be received. At this time, transmission slots excluding the slots (slots 5 and 6) corresponding to the synchronization slot and the broadcasting slot from the transmission slots (slots 5 to 8) on the predetermined slave station side are selected as the slots for transmitting the talking request. In the embodiment, there is shown an example in which the cordless telephone remote unit 3b transmits the talking request in the slot 7 and receives a response to the talking from the indoor apparatus 2b in the slot 3 (S 14).

Upon receipt of the talking request, the indoor apparatus 2b transmits the talking response by using the transmission slot corresponding to the slot receiving the talking request, that is, the slot 3 (S15).

Upon receipt of the talking response, then, the cordless telephone remote unit 4 starts talking from a next slot 7 (S16). Subsequently, voice data are transmitted/received through the indoor apparatus 2b and the cordless telephone remote unit 4 in the slots 3 and 7, and voices of the outdoor apparatus 2a and the cordless telephone remote unit 4 are linked so that the user can carry out talking to the visitor.

The cordless telephone remote unit 4 continuously receives the control data given in the synchronization slot from the cordless telephone base unit 3 even if the talking to the indoor apparatus 2b is started. The reason is as follows. In the case in which the incoming call is given from the telephone line 5 when the cordless telephone remote unit 4 and the indoor apparatus 2b carry out the talking, a notice is to be freely given to the cordless telephone remote unit 4. When a notice of the incoming call is given from the cordless telephone base unit 3 to the cordless telephone remote unit 4, consequently, the speaker talking to the indoor apparatus 2b can be broadcast through a superposition sound, which has a high convenience.

Moreover, the cordless telephone remote unit 4 continuously receives the image data transmitted in the broadcasting slot from the indoor apparatus 2b even if the talking to the indoor apparatus 2b is started. Consequently, the user can observe a condition such as a facial expression of the visitor during talking to the visitor, which is highly convenient.

Also in case of an outside line incoming call, as described above, the cordless telephone base unit 3 broadcasts the outside line incoming call through the synchronization slot and the cordless telephone remote unit 4 receiving the outside line incoming call operates a ringer to inform the user of the incoming call. When the user carries out a connect operation, a transmission slot other than the transmission slots corresponding to the synchronization slot and the broadcast slot is selected to give a talking request to the cordless telephone base unit 3, thereby starting talking to the outside line. The cordless telephone remote unit 4 can continuously receive the broadcast slot and can wait for a call from the indoor apparatus 2b also during the talking to the outside line.

Also in the case in which the call is received from one of them and is broadcast, the cordless telephone remote unit 4 continuously receives the slot for transmitting the other control signal. Also in the case in which the call is given from both the indoor apparatus 2b and the cordless telephone base unit 3, therefore, the broadcast can be carried out at the same time.

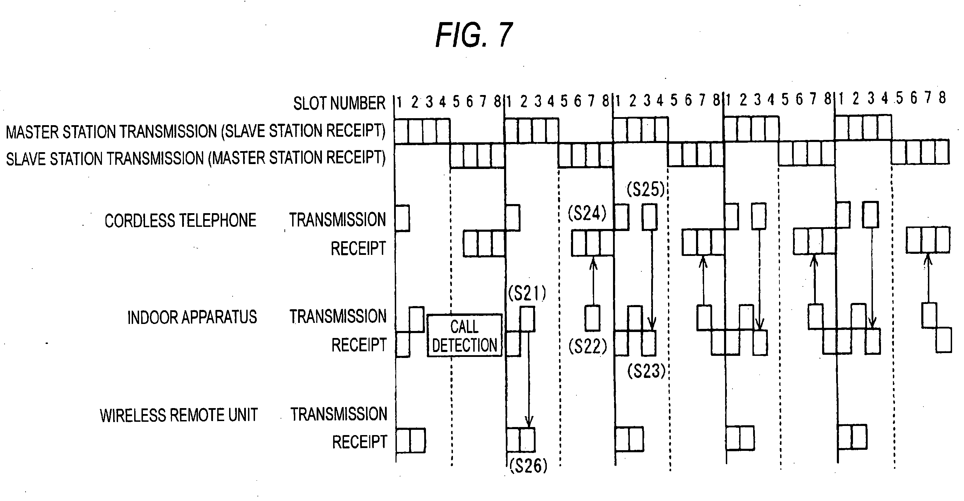

With reference to Fig. 7, next, description will be given to the state of the communication of the indoor apparatus 2b, the cordless telephone base unit 3 and the cordless telephone remote unit 4 which is carried out when the call detecting portion 103 of the outdoor apparatus 2a detects the call of the visitor. The initial states of the cordless telephone base unit 3, the indoor apparatus 2b and the cordless telephone remote unit 4 in Fig. 7 indicate the ending state described with reference to Fig. 6, that is, a state in which the cordless telephone base unit 3 receives a waiting slot while transmitting the control signal in the main synchronization slot, the indoor apparatus 2b receives the waiting slot while transmitting the control signal in the sub synchronization slot, and the cordless telephone remote unit 4 receives the main synchronization slot and the sub synchronization slot.

First of all, description will be given to the operation of the indoor apparatus 2b. When the call of the visitor is detected, a call signal is transmitted to the cordless telephone remote unit 4 in the sub synchronization slot (S21). Then, one of the waiting slots of the cordless telephone base unit 3 is selected to transmit a talking request to the cordless telephone base unit 3 (S22). More specifically, the indoor apparatus 2b selects one of the waiting slots of the self-apparatus to switch the selected slot to carry out an operation of the slave station, thereby starting a transmission to the cordless telephone base unit 3. In order to receive the talking response from the cordless telephone base unit 3, thereafter, a slot corresponding to the slot transmitting the talking request having a transmitting source identification code (ID) to the cordless telephone base unit 3 is switched to carry out the operation of the slave station, that is, a receiving operation (S23). Upon receipt of the talking response from the cordless telephone base unit 3, subsequently, the transmitting operation of the slot transmitting the talking request and the receiving operation of the slot receiving the talking response are continuously carried out. In the example of Fig. 7, the slots 3 and 7 are selected as slots in which the indoor apparatus 2b carries out the communication with the cordless telephone base unit 3. The indoor apparatus 2b indicates an operation to be carried out by setting the slots 3 and 7 as the slave station, that is, an operation for receiving a wireless signal sent from the cordless telephone base unit 3 in the slot 3 and transmitting the wireless signal to the cordless telephone base unit 3 in the slot 7.

Next, description will be given to the operation of the cordless telephone base unit 3. Upon receipt of a control signal in the waiting slot, the cordless telephone base unit 3 checks the transmitting source of the talking request based on the identification code (ID) of the transmitting source which is included in the received control signal. In the case in which the identification code (ID) of the transmitting source is coincident with the identification code (ID) stored in the intercom ID storage portion 310, the cordless telephone base unit 3 recognizes the talking request sent from the indoor apparatus 2b and starts an operation for broadcasting a call from the intercom side. More specifically, the notice of the visitor given from the intercom 2 is broadcast through the broadcasting portion 312 (S24). Then, a talking response is transmitted in a master station transmission slot corresponding to the slot receiving the talking request (S25). Subsequently, the receiving operation of the slot receiving the talking request and the transmitting operation of the slot transmitting the talking response are continuously carried out. In the example of Fig. 7, the slots 3 and 7 are selected as slots in which the cordless telephone base unit 3 carries out the communication with the indoor apparatus 2b. The cordless telephone base unit 3 indicates an operation for transmitting a wireless signal to the indoor apparatus 2b in the slot 3 and receiving the wireless signal from the indoor apparatus 2b in the slot 7.

Next, description will be given to the operation of the cordless telephone remote unit 4. Upon receipt of a call signal in the sub synchronization slot receiving the control signal of the indoor apparatus 2b, the cordless telephone remote unit 4 starts an operation for broadcasting the call from the intercom side while maintaining the receipt of the main synchronization slot and the sub synchronization slot (S26). In other words, the notice of the visitor from the intercom 2 is broadcast by the broadcasting portion 401.

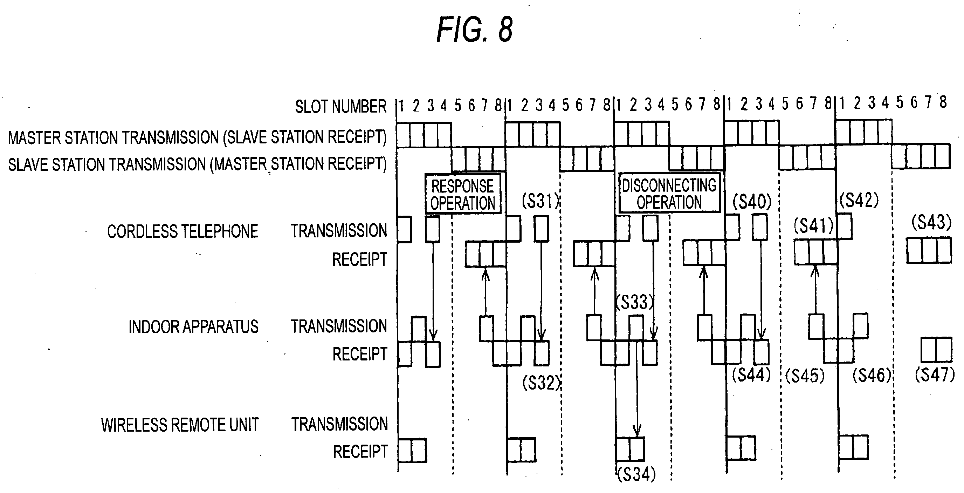

With reference to Fig. 8, next, description will be given to the state of the communication which is carried out when the cordless telephone base unit 3 responds to the call sent from the indoor apparatus 2b. The initial states of the cordless telephone base unit 3, the indoor apparatus 2b and the cordless telephone remote unit 4 in Fig. 8 indicate the ending state described with reference to Fig. 7, that is, a state in which the cordless telephone base unit 3 and the cordless telephone remote unit 4 broadcast the call of the indoor apparatus 2b.

First of all, description will be given to the operation of the cordless telephone base unit 3. When a connect operation for the call sent from the indoor apparatus 2b is carried out by the operating portion 311 in a state in which the cordless telephone base unit 3 broadcasts the call sent from the indoor apparatus 2b, the connect request is transmitted in the transmission slot to the indoor apparatus 2b (S31) and the broadcast of the call is stopped to connect a voice path. Subsequently, the voice of the user of the cordless telephone base unit 3 which is input through the microphone of the talking portion 313 is transmitted to the indoor apparatus 2b through the voice circuit 302, the framing block 306 and the wireless portion 307, and the signal received by the indoor apparatus 2b is output from the speaker of the talking portion 313 through the framing block 306 and the voice circuit 302. In the example of Fig. 8, a voice signal sent from the cordless telephone base unit 3 is transmitted in the slot 3 after S31, and a voice signal sent from the indoor apparatus 2b, that is, the outdoor apparatus 2a is received in the slot 7 and is output from the cordless telephone base unit 3.

Next, description will be given to the operation of the indoor apparatus 2b. Upon receipt of the connect request through the cordless telephone base unit 3 in the slot carrying out the communication with the cordless telephone base unit 3, the indoor apparatus 2b carries out a transition to a talking state to the cordless telephone base unit 3 (S32) and transmits a control signal for a call stop in the sub synchronization slot to the cordless telephone remote unit 4 (S33).

Subsequently, the voice of the visitor input through the microphone of the talking portion 102 of the outdoor apparatus 2b is transmitted to the cordless telephone base unit 3 through the demultiplexing circuit 104, the demultiplexing circuit 220, the voice circuit 206, the framing block 209 and the wireless portion 210, and the signal received by the cordless telephone base unit 3 is output from the speaker of the talking portion 102 through the framing block 209, the voice circuit 206, the demultiplexing circuit 220 and the demultiplexing circuit 104. In the example of Fig. 8, in the slot 3 after S32, the voice signal sent from the cordless telephone base unit 3 is received and is output from the outdoor apparatus 2b, and the voice signal sent from the indoor apparatus 2b, that is, the outdoor apparatus 2a is transmitted in the slot 7.

Next, description will be given to the operation of the cordless telephone remote unit 4. Upon receipt of the control signal for a call stop transmitted from the indoor apparatus 2b in the sub synchronization slot, the cordless telephone remote unit 4 stops the broadcast of the call of the intercom and returns into the waiting state (S34).

With reference to Fig. 8, next, description will be given to the state of the communication which is carried out when disconnecting the talking through the cordless telephone base unit 3 after the cordless telephone base unit 3 responds to the call sent from the indoor apparatus 2b.

First of all, description will be given to the operation of the cordless telephone base unit 3. When the disconnecting operation is carried out by the operating portion 311 in the state in which the cordless telephone base unit 3 talks to the outdoor apparatus 2a through the indoor apparatus 2b, a disconnect request is transmitted in the transmission slot to the indoor apparatus 2b (S40) to disconnect the voice path. Upon receipt of a disconnect confirmation from the indoor apparatus 2b (S41), the slot in which the transmission to the indoor apparatus 2b is carried out is stopped (S42) and the slot receiving the indoor apparatus 2b is switched to carry out an operation of the waiting slot (S43).

Next, description will be given to the operation of the indoor apparatus 2b. Upon receipt of the disconnect request from the cordless telephone base unit 3, the indoor apparatus 2b disconnects the voice path (S44). Then, the disconnect confirmation is transmitted to the cordless telephone base unit 3 (S45). Thereafter, the slot receiving the cordless telephone base unit 3 is stopped (S46) to switch the slot carrying out the transmission to the cordless telephone base unit 3 to carry out the operation of the master station, that is, the operation of the waiting slot (S47).

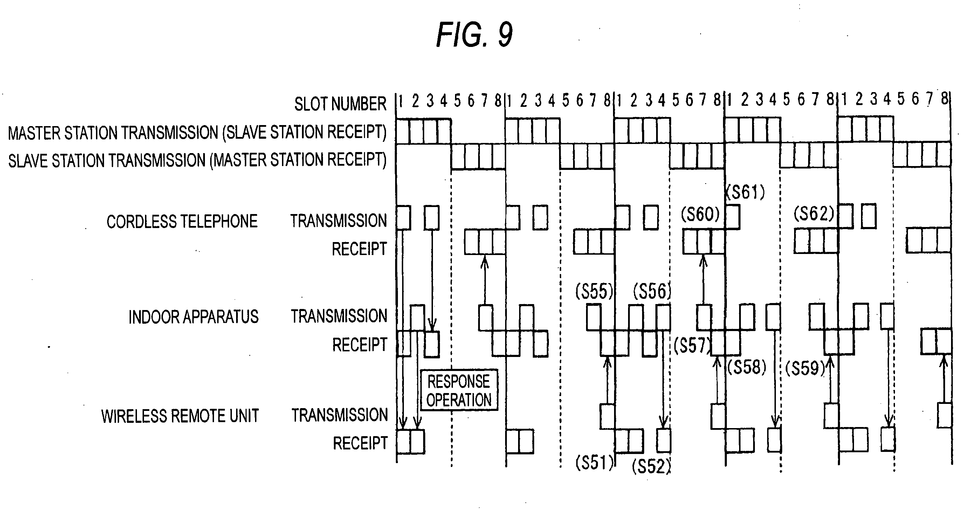

With reference to Fig. 9, next, description will be given to the state of the communication which is carried out when the cordless telephone remote unit 4 responds to the call sent from the indoor apparatus 2b. The initial states of the cordless telephone base unit 3, the indoor apparatus 2b and the cordless telephone remote unit 4 in Fig. 9 indicate the ending state described with reference to Fig. 7, that is, a state in which the cordless telephone base unit 3 and the cordless telephone remote unit 4 broadcast the call of the indoor apparatus 2b.

First of all, description will be given to the operation of the cordless telephone remote unit 4. When a response operation to the call sent from the indoor apparatus 2b is carried out in the operating portion 409 in a state in which the call sent from the indoor apparatus 2b is broadcast in the cordless telephone remote unit 4, one of the transmission slots of the slave station excluding the main synchronization slot and the sub synchronization slot is selected to transmit the connect request with the receipt of the main synchronization slot and the sub synchronization slot maintained (S51), the broadcast of the call is stopped, the receipt of the receipt slot in the slave station corresponding to the slot transmitting the connect request is started and the connect confirmation is received (S52). Upon receipt of the connect confirmation, then, a voice path is connected, and subsequently, the voice of the user of the cordless telephone remote unit 4 input through the microphone of the talking portion 403 is transmitted to the indoor apparatus 2b through the voice circuit 402, the framing block 406 and the wireless portion 407 and the signal received from the indoor apparatus 2b is output from the speaker of the talking portion 403 through the framing block 406 and the voice circuit 402. In the example of Fig. 9, a voice signal sent from the cordless telephone remote unit 4 is transmitted in the slot 8 after S52 with the receipt of the main synchronization slot (slot 1) and the sub synchronization slot (slot 2) maintained, and the voice signal sent from the indoor apparatus 2b, that is, the outdoor apparatus 2a is received in the slot 4 and is output from the cordless telephone remote unit 4.

In the case in which the slot for transmitting the connect request to the indoor apparatus 2b overlaps with the slot for giving a notice of the call to the cordless telephone base unit 3 by the indoor apparatus 2b, the indoor apparatus 2b cannot receive the connect request. Therefore, the connect confirmation is not transmitted to the cordless telephone remote unit 4. For this reason, in the case in which the connect confirmation cannot be received even if the receipt is continuously carried out for a certain time after the transmission of the connect request to the indoor apparatus 2b, the cordless telephone remote unit 4 changes the slot to transmit the connect request to the indoor apparatus 2b.

Next, description will be given to the operation of the indoor apparatus 2b. Upon receipt of the connect request from the cordless telephone remote unit 4 in the slot carrying out the waiting receipt of the cordless telephone remote unit 4, the indoor apparatus 2b starts a control for a transition to a talking state to the cordless telephone remote unit 4 (S55). First of all, the indoor apparatus 2b transmits the connect confirmation to the cordless telephone remote unit 4 in a master station transmission slot corresponding to the slot receiving the connect request to the cordless telephone remote unit 4 (S56). Subsequently, the receipt of the slot receiving the connect request and the transmission of the slot transmitting the connect confirmation are carried out continuously to perform a communication of a voice with the cordless telephone remote unit 4. In the example of Fig. 9, the voice signal sent from the indoor apparatus 2b, that is, the outdoor apparatus 2a is transmitted to the cordless telephone remote unit 4 in the slot 4 after S56, and furthermore, the voice signal sent from the cordless telephone remote unit 4 is received in the slot 8 and is output through the outdoor apparatus 2a. The description of the connecting state of the voice path is the same as that of the operation to be carried out by the cordless telephone base unit 3 with reference to Fig. 8 and will be omitted.

Upon receipt of the connect request from the cordless telephone remote unit 4, moreover, the indoor apparatus 2b transmits the call stop to the cordless telephone base unit 3 in the slave station transmission slot in which the transmission to the cordless telephone base unit 3 is carried out (S57), and the receipt of the slave station receipt slot carrying out a receipt from the cordless telephone base unit 3 is stopped (S58). Then, the operation of the slave station transmission slot carrying out the transmission to the cordless telephone base unit 3 is switched into the operation of the master station, that is, the receiving operation of the waiting slot (S59).

Next, description will be given to the operation of the cordless telephone base unit 3. Upon receipt of the call stop in the slot receiving the indoor apparatus 2b, the cordless telephone base unit 3 stops the broadcast of the call of the intercom (S60) and stops the transmission in the slot carrying out the transmission to the indoor apparatus 2b (S61). Then, the slot receiving the indoor apparatus 2b is switched to a waiting receipt (S62).

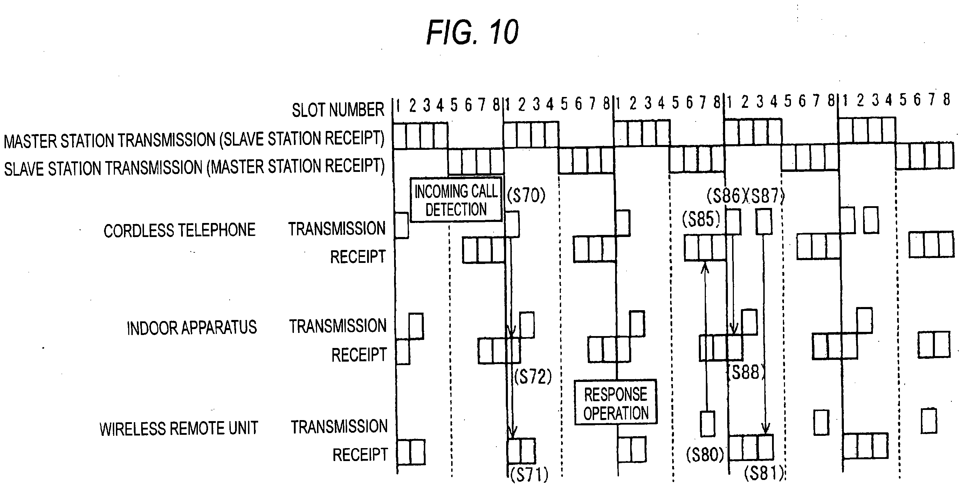

With reference to Fig. 10, next, description will be given to the state of the communication of the indoor apparatus 2b, the cordless telephone base unit 3 and the cordless telephone remote unit 4 which is carried out when the incoming call detecting portion 303 of the cordless telephone base unit 3 detects an outside line incoming call and responds through the cordless telephone remote unit 4. The initial states of the cordless telephone base unit 3, the indoor apparatus 2b and the cordless telephone remote unit 4 in Fig. 10 indicates the ending state described with reference to Fig. 6, that is, a state in which the cordless telephone base unit 3 receives a waiting slot while transmitting the control signal in the main synchronization slot, the indoor apparatus 2b receives the waiting slot while transmitting the control signal in the sub synchronization slot, and the cordless telephone remote unit 4 receives the main synchronization slot and the sub synchronization slot.

First of all, description will be given to an operation for detecting the outside line incoming call and broadcasting the incoming call. When detecting the incoming call from the outside line, the cordless telephone base unit 3 transmits a call signal to the indoor apparatus 2b and the cordless telephone remote unit 4 in the main synchronization slot (S70) and the broadcast of the outside line incoming call is started in the broadcasting portion 312. On the other hand, when receiving the call signal in the main synchronization slot (S71), the cordless telephone remote unit 4 starts the broadcast of the outside line incoming call in the broadcasting portion 401 while maintaining the receipt of the main synchronization slot and the sub synchronization slot. Upon receipt of the call signal in the main synchronization slot (S72), similarly, the indoor apparatus 2b starts the broadcast of the outside line incoming call in the broadcasting portion 205 while maintaining the receipt of the main synchronization slot and the transmission of the sub synchronization slot (S72).

Next, description will be given to an operation to be carried out when responding to the outside line incoming call by the cordless telephone remote unit 4. When a response operation to the outside line incoming call is carried out in the operating portion 409 in a state in which the outside line incoming call is broadcast by the cordless telephone remote unit 4, one of the transmission slots in the slave station excluding the slots corresponding to the main synchronization slot and the sub synchronization slot is selected and a connect request is transmitted while maintaining the receipt of the main synchronization slot and the sub synchronization slot (S80), and the broadcast of the outside line incoming call is stopped and the receipt of the receipt slot in the slave station corresponding to the slot transmitting the connect request is started to receive a connect confirmation (S81). Upon receipt of the connect confirmation, a voice path is connected, and subsequently, the voice of the user of the cordless telephone remote unit 4 input through the microphone of the talking portion 403 is transmitted to the cordless telephone base unit 3 through the voice circuit 402, the framing block 406 and the wireless portion 407 and the signal received from the cordless telephone base unit 3 is output from the speaker of the talking portion 403 through the framing block 406 and the voice circuit 402. In the example of Fig. 10, a voice signal sent from the cordless telephone remote unit 4 is transmitted in the slot 7 after S81 while maintaining the receipt of the main synchronization slot (slot 1) and the sub synchronization slot (slot 2), and a voice signal sent from the cordless telephone base unit 3, that is, a transmitter is received in the slot 3 and is output through the cordless telephone remote unit 4.

On the other hand, upon receipt of the connect request from the cordless telephone remote unit 4 in the waiting slot in a state in which the outside line incoming call is broadcast, the cordless telephone base unit 3 starts to control for starting the communication with the cordless telephone remote unit 4 (S85), broadcasts the stop of the incoming call in the main synchronization slot (S86), transmits a connect confirmation in the master station transmission slot corresponding to the slot receiving the connect request (S87), and connects the voice path. Subsequently, the voice of the transmitter input from the telephone line 5 is transmitted to the cordless telephone remote unit 4 through the line interface portion 301, the voice circuit 302, the framing block 306 and the wireless portion 307, and the signal received from the cordless telephone remote unit 4 is output to the telephone line 5 through the framing block 306, the voice circuit 302 and the line interface portion 301. In the example of Fig. 10, a voice signal sent from the telephone line 5, that is, the transmitter is transmitted in the slot 3 after S87 and is received from the cordless telephone remote unit 4 in the slot 7 and is output to the telephone line 5.

Upon receipt of the broadcast of the stop of the incoming call in the main synchronization slot, moreover, the indoor apparatus 2b stops the broadcast of the outside line incoming call (S88).

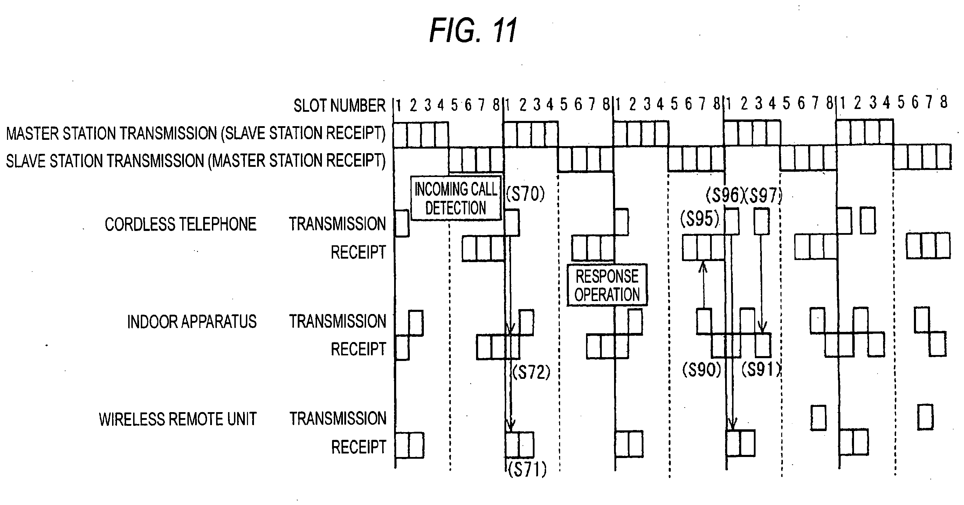

With reference to Fig. 11, next, description will be given to the state of the communication of the indoor apparatus 2b and the cordless telephone base unit 3 with the cordless telephone remote unit 4 which is carried out when the incoming call detecting portion 303 of the cordless telephone base unit 3 detects the outside line incoming call and responds through the cordless telephone remote unit 4. The initial states of the cordless telephone base unit 3, the indoor apparatus 2b and the cordless telephone remote unit 4 in Fig. 11 indicate the ending state described with reference to Fig. 6, that is, a state in which the cordless telephone base unit 3 receives a waiting slot while transmitting the control signal in the main synchronization slot, the indoor apparatus 2b receives the waiting slot while transmitting the control signal in the sub synchronization slot, and the cordless telephone remote unit 4 receives the main synchronization slot and the sub synchronization slot. The operation for detecting the outside line incoming call and broadcasting the incoming call is the same as that in each of the (S70), (S71) and (S72) in Fig. 10, and the same reference numerals are given and description will be omitted.

First of all, description will be given to an operation to be carried out when responding to the outside line incoming call through the indoor apparatus 2b. When a response operation to the outside line incoming call is carried out in the operating portion 211 in a state in which the outside line incoming call is broadcast by the indoor apparatus 2b, one of the transmission slots in the slave station excluding the slots corresponding to the main synchronization slot and the sub synchronization slot is selected and a connect request is transmitted while maintaining the receipt of the main synchronization slot and the transmission of the sub synchronization slot (S90), and the broadcast of the outside line incoming call is stopped and the receipt of the receipt slot in the slave station corresponding to the slot transmitting the connect request is started to receive a connect confirmation (S91). Upon receipt of the connect confirmation, a voice path is connected, and subsequently, the voice of the user of the indoor apparatus 2b input through the microphone of the talking portion 207 is transmitted to the cordless telephone base unit 3 through the voice circuit 206, the framing block 209 and the wireless portion 210 and the signal received from the cordless telephone base unit 3 is output from the speaker of the talking portion 206 through the framing block 210 and the voice circuit 206. In the example of Fig. 11, in the indoor apparatus 2b, when the response operation is carried out, switching to a control with the slots 3 and 7 to be the slave station is performed with the receipt of the main synchronization slot (slot 1) and the transmission of the sub synchronization slot (slot 2) maintained, and a voice signal sent from the indoor apparatus 2b is transmitted in the slot 7 after S91, and a voice signal sent from the cordless telephone base unit 3, that is, a transmitter is received in the slot 3 and is output through the indoor apparatus 2b.

On the other hand, upon receipt of the connect request from the indoor apparatus 2b in the waiting slot in a state in which the outside line incoming call is broadcast, the cordless telephone base unit 3 starts a control for starting the communication with the indoor apparatus 2b (S95), broadcasts the stop of the incoming call in the main synchronization slot (S96), transmits a connect confirmation in the master station transmission slot corresponding to the slot receiving the connect request (S97), and connects the voice path. Subsequently, the voice of the transmitter input from the telephone line 5 is transmitted to the indoor apparatus 2b through the line interface portion 301, the voice circuit 302, the framing block 306 and the wireless portion 307, and the signal received from the indoor apparatus 2b is output to the telephone line 5 through the framing block 306, the voice circuit 302 and the line interface portion 301. In the example of Fig. 10, a voice signal sent from the telephone line 5, that is, the transmitter is transmitted in the slot 3 after S97 and is received from the indoor apparatus 2b in the slot 7 and is output to the telephone line 5.

Upon receipt of the broadcast of the stop of the incoming call in the main synchronization slot, moreover, the cordless telephone remote unit 4 stops the broadcast of the outside line incoming call (S98).

Next, description will be given to an operation to be carried out when an outside line incoming call and a call from the outdoor apparatus are generated at the same time.

First of all, description will be given to an operation to be carried out when the call of the intercom is generated during the outside line incoming call.

If the outside line incoming call is generated, the indoor apparatus 2b starts the broadcast of the outside line incoming call while continuously transmitting the sub synchronization slot and the cordless telephone remote unit 4 starts the broadcast of the outside line incoming call while continuously receiving the sub synchronization slot when the outside line incoming call is broadcast in the main synchronization slot through the cordless telephone base unit 3 as described in the (S70), (S71) and (S72) of Fig. 10. When the call detecting portion 103 of the outdoor apparatus 2a of the indoor apparatus 2b detects the call of a visitor in this state, the indoor apparatus 2b changes the contents of the broadcast of the broadcasting portion 205 into a state for broadcasting the outside line incoming call and the intercom call, and a call signal is transmitted to the cordless telephone remote unit 4 in the sub synchronization slot and a pair of transmission/receipt slots are switched to carry out the operation of the slave station, thereby giving a notice of the call to the cordless telephone base unit 3 in the same manner as in the (S21), (S22) and (S23) of Fig. 7. On the other hand, upon receipt of the call signal from the indoor apparatus 2b, the cordless telephone remote unit 4 broadcasting the outside line incoming call changes the contents of the broadcast of the broadcasting portion 401 into a state in which the outside line incoming call and the intercom call are broadcast. Upon receipt of the call signal from the indoor apparatus 2b, similarly, the cordless telephone base unit 3 broadcasting the outside line incoming call changes the contents of the broadcast of the broadcasting portion 312 into a state in which the outside line incoming call and the intercom call are broadcast.

Next, description will be given to an operation to be carried out in the case in which the outside line incoming call is generated during the call of the intercom.

When the call detecting portion 103 of the outdoor apparatus 2a of the indoor apparatus 2b detects the call of the visitor and generates the call of the intercom, the indoor apparatus 2b broadcasts the call of the intercom through the broadcasting portion 205, and transmits a call signal to the cordless telephone remote unit 4 in the sub synchronization slot, switches a pair of transmission/receipt slots to carry out the operation of the slave station and gives a notice of the call to the cordless telephone base unit 3 while continuously carrying out the receipt of the main synchronization slot as described in the (S21), (S22) and (S23) of Fig. 7. Upon receipt of the call signal from the indoor apparatus 2b, then, the cordless telephone remote unit 4 changes the contents of the broadcast of the broadcasting portion 401 into a state in which the intercom call is broadcast. Upon receipt of the call signal from the indoor apparatus 2b, similarly, the cordless telephone base unit 3 changes the contents of the broadcast of the broadcasting portion 312 into a state in which the intercom call is broadcast. When detecting the outside line incoming call in this state, the cordless telephone base unit 3 changes the contents of the broadcast of the broadcasting portion 312 into a state in which the outside line incoming call and the intercom call are broadcast, and the outside line incoming call is broadcast into the indoor apparatus 2b and the cordless telephone remote unit 4 in the main synchronization slot in the same manner as in the (S70), (S71) and (S72) of Fig. 10. On the other hand, upon receipt of the broadcast of the outside line incoming call from the cordless telephone base unit 3, the cordless telephone remote unit 4 broadcasting the intercom call changes the contents of the broadcast of the broadcasting portion 401 into a state in which the outside line incoming call and the intercom call are broadcast. Upon receipt of the broadcast of the outside line incoming call through the cordless telephone base unit 3, similarly, the indoor apparatus 2b broadcasting the intercom call changes the contents of the broadcast of the broadcasting portion 205 into a state in which the outside line incoming call and the intercom call are broadcast.

Next, description will be given to an operation to be carried out when the call of the intercom is generated during outside line talking.

First of all, description will be given to an operation to be carried out when the call of the intercom is generated in the case in which the outside line talking is carried out through the cordless telephone remote unit 4.

An operation to be carried out before the cordless telephone remote unit 4 responds to the outside line incoming call and the cordless telephone remote unit 4 and the transmitter perform talking is the same as that in the description with reference to Fig. 10. In a state in which the cordless telephone remote unit 4 carries out the outside line talking, the cordless telephone remote unit 4 performs the communication with the cordless telephone base unit 3 while continuously carrying out the receipt of the sub synchronization slot. When the call detecting portion 103 of the outdoor apparatus 2a of the indoor apparatus 2b detects the call of the visitor and the call of the intercom is generated in this state, the indoor apparatus 2b broadcasts the call of the intercom through the broadcasting portion 205, a call signal is transmitted to the cordless telephone remote unit 4 in the sub synchronization slot and a pair of transmission/receipt slots are switched to carry out the operation of the slave station, thereby giving a notice of the call to the cordless telephone base unit 3 as described in the (S21), (S22) and (S23) of Fig. 7. Upon receipt of the call signal from the indoor apparatus 2b, then, the cordless telephone remote unit 4 changes the contents of the broadcast of the broadcasting portion 401 into a state in which the call of the intercom is broadcast. Moreover, the cordless telephone remote unit 4 may output a notice sound which is superposed on a voice during the outside line talking or stops the voice during the outside line talking and gives a notice of the call of the intercom through the speaker of the talking portion 403. In the case in which a response to the call of the intercom is given during the outside line talking through the cordless telephone remote unit 4, an operation for holding the outside line talking in the operating portion 409 or an operation for disconnecting the outside line talking is carried out and a response operation to the call from the indoor apparatus 2b is performed. Subsequently, the indoor apparatus 2b and the cordless telephone remote unit 4 are connected to each other in the same manner as the operation to be carried out when the response is given to the call of the intercom through the cordless telephone remote unit 4 as described with reference to Fig. 9. In the case in which the call of the intercom is generated when the outside line talking is carried out through the cordless telephone remote unit 4, similarly, the cordless telephone base unit 3 changes the contents of the broadcast of the broadcasting portion 312 into a state in which the call of the intercom is broadcast upon receipt of a call signal from the indoor apparatus 2b. When the response operation to the call of the intercom is carried out by the operating portion 311 of the cordless telephone base unit 3, then, the indoor apparatus 2b and the cordless telephone base unit 3 are connected to each other in the same manner as the operation to be carried out when responding to the call of the intercom through the cordless telephone base unit 3 as described with reference to Fig. 8 while continuously carrying out a processing during the connection of the cordless telephone remote unit 4 and the outside line talking.

Next, description will be given to an operation to be carried out when the outside line incoming call is generated during the communication of the intercom.

First of all, description will be given to an operation to be carried out when the outside line incoming call is generated during the talking to the intercom through the cordless telephone remote unit 4.

An operation to be carried out before the cordless telephone remote unit 4 responds to the call of the intercom and the visitor operating the cordless telephone remote unit 4 and the outdoor apparatus 2a performs the talking is the same as that in the description with reference to Fig. 9, and the cordless telephone remote unit 4 carries out a communication with the indoor apparatus 2b while continuously receiving the main synchronization slot in a state in which the cordless telephone remote unit 4 performs the talking to the indoor apparatus 2b. In this state, the incoming call detecting portion 303 of the cordless telephone base unit 3 detects the outside line incoming call. When the outside line incoming call is generated, the cordless telephone base unit 3 broadcasts the outside line incoming call through the broadcasting portion 312 and starts to broadcast the outside line incoming call to the indoor apparatus 2b and the cordless telephone remote unit 4 in the main synchronization slot as described in the (S70), (S71) and (S72) of Fig. 10. Upon receipt of the broadcast of the outside line incoming call from the cordless telephone base unit 3, then, the cordless telephone remote unit 4 changes the contents of the broadcast of the broadcasting portion 401 into a state in which the outside line incoming call is broadcast. Moreover, the cordless telephone remote unit 4 may output a notice sound which is superposed on a voice during talking to the intercom side or stops the voice during the talking to the intercom side and gives a notice of the outside line incoming call through the speaker of the talking portion 403. In the case in which a response to the outside line incoming call is given during the communication with the intercom through the cordless telephone remote unit 4, an operation for holding the communication with the intercom or an operation for disconnecting the communication with the intercom is carried out by the operating portion 409 and a response operation to the outside line incoming call from the cordless telephone base unit 3 is performed. Subsequently, the cordless telephone base unit 3 and the cordless telephone remote unit 4 are connected in the same manner as in the operation to be carried out when responding to the outside line incoming call through the cordless telephone remote unit 4 as described above with reference to Fig. 10. In the case in which the outside line incoming call is generated during the communication of the intercom through the cordless telephone remote unit 4, similarly, the cordless telephone base unit 3 changes the contents of the broadcast of the broadcasting portion 312 into a state in which the outside line incoming call is broadcast. When the response operation to the outside line incoming call is carried out by the operating portion 311 of the cordless telephone base unit 3, then, an operation is carried out to stop the broadcast of the outside line incoming call of the broadcasting portion 312 and to start the talking of a transmitter and a user of the cordless telephone base unit 3 through the line interface portion 301, the voice circuit 302 and the talking portion 313.

Next, description will be given to a registering operation of the cordless telephone base unit 3 and the intercom 2.

The intercom 2 is operated as the slave station of the cordless telephone base unit 3. Therefore, it is necessary to store and hold mutual identification information (ID). When an operation for starting the registering operation is carried out by the operating portion 211 of the intercom 2, the control portion 214 starts the control of the registering operation. When the registering operation is started by the intercom 2, the indoor apparatus 2b first starts a continuous receipt and stops the continuous receipt upon receipt of a control signal transmitted from the cordless telephone base unit 3, and establishes the synchronization of a frame and a slot with the cordless telephone base unit 3 based on information such as a slot number included in the control signal. Except for the slot receiving the control signal from the cordless telephone base unit 3, then, a set of transmission/receipt slots are selected and operated as the slave station, and a registration request including the identification information of the self-apparatus which is stored in the intercom ID storage portion 216 is transmitted to the cordless telephone base unit 3 in the selected transmission slot, that is, the waiting slot of the cordless telephone base unit 3, thereby standing by in the receipt of a registration acceptance. Upon receipt of the registration acceptance, thereafter, the identification information of the cordless telephone base unit 3 which is included in the registration acceptance is stored in the telephone base unit ID storage portion 215 to start the operation of the sub master station. In the case in which the registration acceptance cannot be received even if the receipt is carried out continuously for a certain time or a registration disable is received after the transmission of the registration request, the intercom 2 stops the transmission/receipt of the cordless telephone base unit 3 during talking and carries out the continuous receipt again to perform the registering operation over the other cordless telephone base unit 3.

On the other hand, when the operation for starting the registering operation is carried out by the operating portion 311 of the cordless telephone base unit 3, the control portion 320 starts the control of the registering operation and is operated to accept a registration request from the intercom 2 for a certain time. Upon receipt of the registration request from the intercom 2 in a state in which the registration request can be accepted from the intercom 2 of the cordless telephone base unit 3, the registration acceptance including the identification information of the self-apparatus which is stored in the telephone base unit ID storage portion 305 is transmitted in the master station transmission slot corresponding to the slot accepting the registration request, and furthermore, the identification information included in the registration request, that is, the identification information of the intercom 2 to be a transmitting source is stored in the intercom ID storage portion 310. Upon receipt of the registration request from the intercom 2 in a state in which the registration request cannot be accepted from the intercom 2 of the cordless telephone base unit 3, furthermore, the cordless telephone base unit 3 transmits the registration disable in the master station transmission slot corresponding to the slot accepting the registration request.

Next, description will be given to the case in which the intercom 2 carries out an operation which is equivalent to that of the main master station.

When the power supply is turned on, that is, in the case in which the identification information stored in the telephone base unit ID storage portion 215 is not set in the start of the operation (for example, the identification information is ALLO), the intercom 2 does not carry out the operation of the sub master station but determines the timings of a frame and a slot of a time division communication in a self-timing, selects one of the master station transmission slots and transmits a control signal, and furthermore, waits for a wireless signal from the slave station, that is, the cordless telephone remote unit 4 by setting, as the waiting slots, the master station receipt slots excluding the slot corresponding to the slot for transmitting the control signal.

When the power supply is turned on, that is, in the case in which the identification information stored in the telephone base unit ID storage portion 215 is set in the start of the operation, moreover, the intercom 2 searches for the cordless telephone base unit 3 stored in the telephone base unit ID storage portion 215 as described in the (S3) of Fig. 6. In the case in which the control signal of the cordless telephone base unit 3 which is stored in the telephone base unit ID storage portion 215 cannot be received even if a continuous receipt is carried out for a certain time, however, the intercom 2 stops the continuous receipt, determines the timings of the frame and the slot in the time division communication in the self-timing, selects one of the master station transmission slots and transmits the control signal, and furthermore, waits for a wireless signal from the slave station, that is, the cordless telephone remote unit 4 by setting, as the waiting slots, the master station receipt slots excluding the slot corresponding to the slot for transmitting the control signal in the same manner as described above.

In the case in which the intercom 2 fails in the receipt of the main synchronization slot for a certain time after receiving the main synchronization slot of the cordless telephone base unit 3 which is stored in the telephone base unit ID storage portion 215 and setting the same slot as the sub master station to start the operation, it reactivates the self-apparatus and restarts the search of the cordless telephone base unit 3 in the ON operation of the power supply.

Next, description will be given to a method of transmitting/receiving an image of a visitor during an intercom call and talking.

In the case in which the call detecting portion 103 of the outdoor apparatus 2a of the intercom 2 detects a call, it is also possible to carry out an operation for transmitting an image photographed by the camera portion 101 and displaying the image of the visitor by means of the monitor 202 of the indoor apparatus 2b, the broadcasting portion 312 of the cordless telephone base unit 3 and the monitor 414 of the cordless telephone remote unit 4.

When the call detecting portion 103 of the outdoor apparatus 2a of the intercom 2 detects the call, the control portion 214 reactivates the camera portion 101 to start to photograph the visitor. The image photographed by the camera portion 101 is output to the indoor apparatus 2b through the demultiplexing circuit 104 and is output to the monitor circuit 201 through the demultiplexing circuit 220. The monitor circuit 201 outputs the image sent from the outdoor apparatus 2a to the monitor 202 and displays an image sent from the outdoor apparatus 2a through the monitor 202. Moreover, the monitor circuit 201 outputs the image sent from the outdoor apparatus 2a to the image information storage portion 203. The image information storage portion 203 converts an input image into a digital image such as a JPEG image in a timing specified from the control portion 214 and stores the image information. On the other hand, when the call detecting portion 103 of the outdoor apparatus 2a of the intercom 2 detects the call, the control portion 214 broadcasts the call from the intercom side to the cordless telephone base unit 3 and the cordless telephone remote unit 4 and the call of the intercom is broadcast through the cordless telephone base unit 3 and the cordless telephone remote unit 4 as described with reference to Fig. 7. At this time, however, there is carried out an operation to give a notice of the call of the intercom of the cordless telephone base unit 3 and the cordless telephone remote unit 4, and furthermore, to transmit image information obtained by digitally converting the image data transmitted from the outdoor apparatus 2a which are stored in the image information storage portion 203 (which will be hereinafter referred to as a digital image) and to display, on the broadcasting portion 312 of the cordless telephone base unit 3 and the monitor 414 of the cordless telephone remote unit 4, the image information obtained by digitally converting the image data transmitted from the outdoor apparatus 2a which are received by the indoor apparatus 2b.

First of all, description will be given to the operation for transmitting the image information from the indoor apparatus 2a to the cordless telephone remote unit 4. The control portion 214 transmits the digital image obtained by digitally converting the image data sent from the outdoor apparatus 2a which are stored in the image information storage portion 203 to the cordless telephone remote unit 4 by using the sub synchronization slot. When detecting the call of the visitor, the control portion 214 utilizes a format having both the control data field and the information field shown in Fig. 5 in the sub synchronization slot and superposes a call signal for giving a notice of an intercom call on the control data field, thereby transmitting a call signal to the cordless telephone remote unit 4. Then, the control portion 214 activates the camera portion 101 and designates a conversion of an image to the image information storage portion 203. Then, the control portion 214 reads the digital image obtained by the conversion through the image information storage portion 203 and outputs the digital image to the framing block 209 in the transmission timing of the sub synchronization slot in order to transmit the same digital image in the information field of the sub synchronization slot. In the framing block 209, the digital image is set to the information field in the sub synchronization slot and adds a check code CRC 2 of the information field, and outputs the check code CRC 2 together with a synchronizing signal, a control field and the check code CRC 1 of the control data field, and a wireless signal setting the digital image information to the information field in the sub synchronization slot is transmitted by the wireless portion 210. When completing the transmission of the digital image corresponding to one screen which is converted and stored in the image information storage portion 203, the control portion 214 carries out such a control as to designate the conversion of the image to the image information storage portion 203 and to update the digital image again, and sequentially reads the digital image thus updated and continuously carries out the transmission.

On the other hand, the cordless telephone remote unit 4 receives the sub synchronization slot in a standby state and makes a broadcasting sound with a tone to inform a user of the call of the intercom through the broadcasting portion 401, for example, upon receipt of the broadcast of the intercom call in the sub synchronization slot. Then, the digital image sent from the indoor apparatus 2b, that is, the image of the visitor photographed by the camera portion 101 of the outdoor apparatus 2a is displayed on the monitor 414. More specifically, upon receipt of a call signal for giving a notice of the intercom call in the control field of the sub synchronization slot, the control portion 410 controls the wireless portion 407 and the framing block 406 in order to receive the information field of the sub synchronization slot and the CRC 2. The framing block 406 separates the information field and the CRC 2 based on the synchronizing signal from the demodulation data received and demodulated in the sub synchronization slot and detects a receiving error based on the CRC 2, and outputs the data of the information field which are received to the control portion 410 when they are received correctly. Thereafter, the control portion 410 decodes the data of the information field which are received and converts the same data into an original image, and outputs the image to the monitor circuit 404, and the image is displayed on the monitor 414. In the case in which data on the digital image received in the control portion 410 are decoded, there is carried out a control for decoding the image data in order to display an image corresponding to a defective data portion so as to be white and for generating and displaying an image having a part of the image lacking when the receiving error is generated and a part of the information of the digital image is lacking.

Next, description will be given to an operation for transmitting the image information from the indoor apparatus 2a to the cordless telephone base unit 3. The control portion 214 carries out the control and transmits an image photographed by the camera portion 101 by using a wireless slot started to give a notice of the call of the intercom to the cordless telephone base unit 3 while transmitting the image photographed by the camera portion 101 to the cordless telephone remote unit 4 by using the sub synchronization slot. When the indoor apparatus 2a and the cordless telephone base unit 3 detect the call of the visitor, a mutual wireless communication is started by the control in the (S22), (S23), (S24) and (S25) of Fig. 7 and the notice of the call of the intercom is given from the indoor apparatus 2a to the cordless telephone base unit 3. At this time, by utilizing a format having both the control data field and the information field shown in Fig. 5, a call signal for giving a notice of the call of the intercom is superposed on the control data field and the call signal is transmitted to the cordless telephone base unit 3, and a digital image stored and held in the image information storage portion 203 is superposed on the information field, and the image photographed by the camera portion 101 is transmitted to the cordless telephone base unit 3. More specifically, the control portion 214 establishes a wireless link between the indoor apparatus 2a and the cordless telephone base unit 3 in order to give a notice of the call of the intercom, and reads the digital image obtained by the conversion through the image information storage portion 203 and outputs the digital image to the framing block 209 in the transmission timing of the pertinent slot in order to transmit the digital image in the information field of the communication slot when a mutual wireless communication is started. The framing block 209 sets the digital image to the information field of the pertinent slot, adds the check code CRC 2 of the information field, outputs the check code CRC 2 to the wireless portion 210 together with the synchronizing signal, the control field and the check code CRC 1 of the control data field, and transmits a wireless signal setting the digital image information to the information field in the sub synchronization slot from the wireless portion 210. The digital image to be transmitted to the cordless telephone base unit 3 may be the same as the digital image to be transmitted to the cordless telephone remote unit 4. In the case in which the same digital image is transmitted, the control portion 214 reads a digital image stored in the image information storage portion 203 in the timings of the sub synchronization slot and the transmission slot to the cordless telephone base unit 3 and outputs the digital image to the framing block 209. When completing the transmission of the digital image corresponding to one screen which is converted and stored by the image information storage portion 203 to both the cordless telephone base unit 3 and the cordless telephone remote unit 4, the control portion 214 designates the conversion of the image to the image information storage portion 203, controls to update the digital image and sequentially reads and transmits the updated digital image again.

On the other hand, the cordless telephone base unit 3 receives the waiting slot in the standby state, and makes a broadcasting sound with a tone to inform the user of the call of the intercom through the broadcasting portion 312, for example, when receiving the broadcast of the call of the intercom in the waiting slot and establishing a wireless link to the cordless telephone base unit 3. Then, the digital image sent from the indoor apparatus 2b, that is, the image of the visitor photographed by the camera portion 101 of the outdoor apparatus 2a is displayed on the monitor 315. In other words, upon receipt of the call signal for giving the notice of the intercom call in the control field of the waiting slot, the control portion 320 starts an operation to control the wireless portion 307 and the framing block 306 in order to receive the information field of the waiting slot (hereinafter referred to as a communication slot) receiving the call of the intercom and the CRC 2 and to establish the wireless link to the cordless telephone base unit 3. The framing block 306 separates the information field and the CRC 2 based on the synchronizing signal from the demodulation data received and demodulated in the communication slot and detects a receiving error based on the CRC 2, and outputs the data of the information field which are received to the control portion 320 when they are received correctly. Thereafter, the control portion 320 decodes the data of the information field which are received and converts the same data into an original image, and outputs the image to the monitor circuit 314, and the image is displayed on the monitor 315. In the case in which data on the digital image received in the control portion 320 are decoded, there is carried out a control for decoding the image data in order to display an image corresponding to a defective data portion so as to be white and for generating and displaying an image having a part of the image lacking when the receiving error is generated and a part of the information of the digital image is lacking.

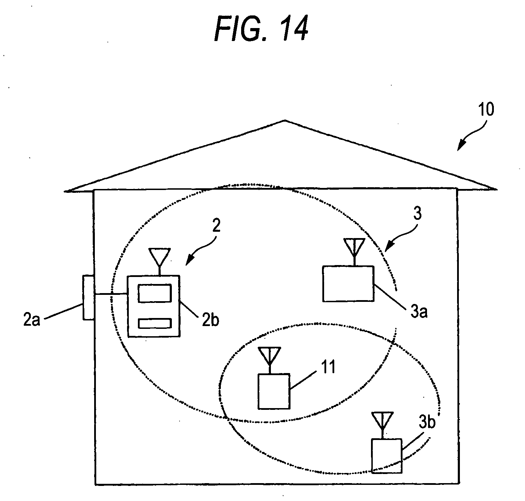

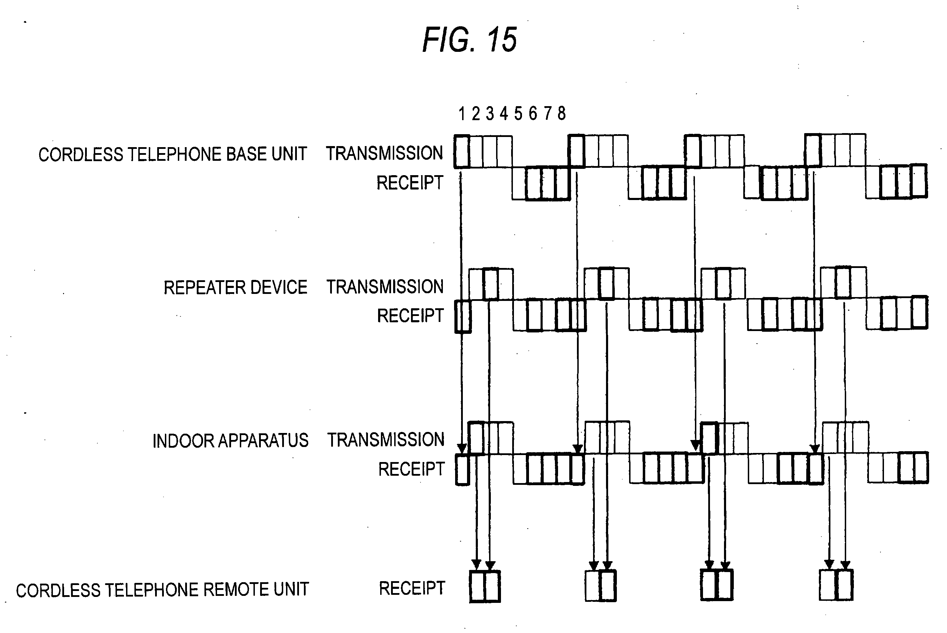

With reference to Figs. 14 and 15, next, description will be given to the case in which a repeater device to be a wireless relay device is provided in such a manner that the cordless telephone remote unit 4 is disposed within a range in which a communication with the cordless telephone base unit 3 cannot be carried out. Fig. 14 is a view showing the case in which the wireless relay device is provided in the wireless communication system according to the embodiment of the invention. Fig. 15 is a diagram for explaining the states of a transmission slot and a receipt slot which are brought when a communication is carried out in the wireless communication system comprising the wireless relay device according to the embodiment of the invention. In Fig. 14, components having the same structures as those in Fig. 1 have the same reference numerals, and description will be omitted.

Since a wireless communication system 10 shown in Fig. 14 is placed at a distance which the packets of the cordless telephone base unit 3 and the cordless telephone remote unit 4 cannot reach, it comprises a repeater device 11.

As shown in Fig. 15, the repeater device 11 according to the embodiment carries out a retransmission by setting a packet of control data of the cordless telephone base unit 3 to be an odd-numbered slot and a transmission of a control signal of the intercom 2 to be an even-numbered slot.

In detail, in the case in which the cordless telephone base unit 3 transmits control data in a slot 1 to be a synchronization slot, the repeater device 11 receives the control data of the cordless telephone base unit 3 in the slot 1 and transmits, in a slot 3 to be the odd-numbered slot, the control data (a cordless telephone base unit ID and a call control signal) received in the slot 1.

The cordless telephone remote unit 4b receives the control data of the indoor apparatus 2b by setting a slot 2 to be a broadcasting slot and the control data of the repeater device 11 by setting the slot 3 to be the synchronization slot. At this time, the cordless telephone base unit 3 or the repeater device 11 transmits the control data in the odd-numbered slot and the indoor apparatus 2b transmits the control data in the even-numbered slot. Therefore, the cordless telephone remote unit 4 can receive the control data of the indoor apparatus 2b and the repeater device 11 in separate slots.

In the case in which the repeater device 11 is set to be the relay device of the indoor apparatus 2b, moreover, the repeater device 11 receives the control data of the indoor apparatus 2b in the two slots and transmits the control data in the slot 4 to be the even-numbered slot so that the communication with the indoor apparatus 2b can be relayed without an interference.

In the example, the repeater device 11 carries out the retransmission by setting the packet of the control data of the cordless telephone base unit 3 to be the odd-numbered slot and the transmission of the control signal of the indoor apparatus 2b to be the even-numbered slot in such a manner that the cordless telephone remote unit 4 can receive both the control data in the synchronization slot and the control data in the broadcasting slot. Consequently, the cordless telephone remote unit 4 can receive the control signal in the synchronization slot which is transmitted from either the cordless telephone base unit 3 or the repeater device 11 for retransmitting the signal of the cordless telephone base unit 3 a and the control signal in the broadcasting slot which is transmitted by either the intercom 2 or the repeater device 11 for retransmitting the signal of the intercom 2. If the slot used by the cordless telephone base unit 3 and the repeater device 11 for retransmitting the signal of the cordless telephone base unit 3 and the slot used by the intercom 2 and the repeater device 11 for retransmitting the signal of the intercom 2 are separated from each other, however, the cordless telephone remote unit 4 can receive both the control data in the synchronization slot and the control data in the broadcasting slot. For example, the cordless telephone remote unit 4 may receive both the control data in the synchronization slot and the control data in the broadcasting slot by distributing the slots to be used in the first and second halves of the slot in a frame, respectively.

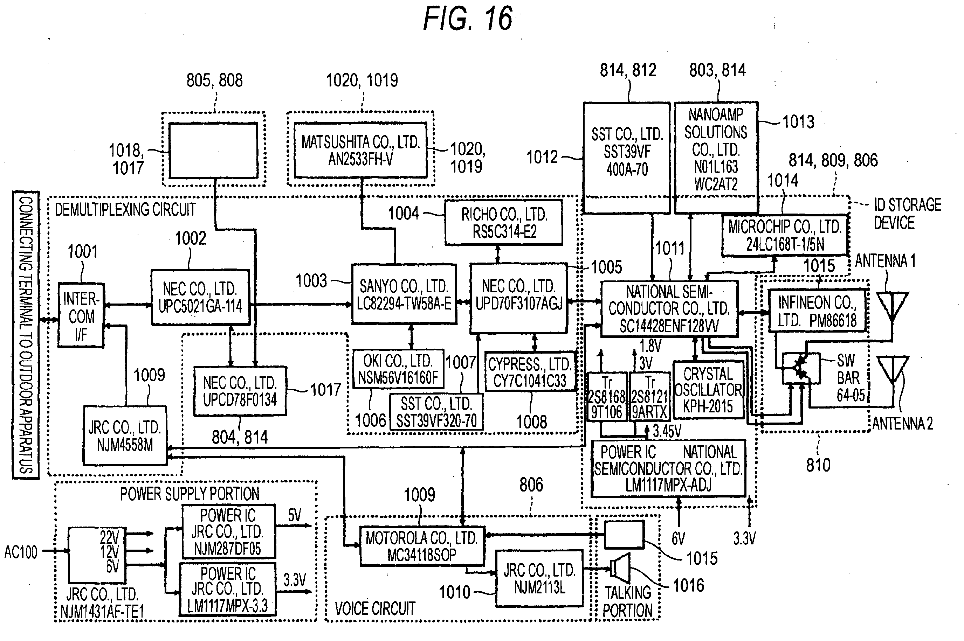

Fig. 16 shows a hardware structure for implementing the indoor apparatus 2b to be the sub master station.

A demultiplexing circuit 820 is constituted by a transistor as an electrical interface for separating and superposing an image signal of a visitor which is received from the outdoor apparatus 2a, a conversation voice signal with the visitor through the outdoor apparatus 2a, and a visitor notice signal received from the outdoor apparatus 2a.

A hardware structure corresponding to the demultiplexing circuit 820 includes an intercom interface 1001, an image demodulating IC 1002 for converting an image signal between the outdoor apparatus 2a and the indoor apparatus 2b which is output from the intercom interface 1001 into an analog image signal to be used in a latter stage, a video capture IC 1003 for converting the analog signal of the image demodulating IC into a digital video signal, an SDRAM 1006 for storing the digital video signal, a V850CPU 1005 to be a CPU for carrying out a management such as a recording and reproduction of the digital video signal, an FRASH ROM 1007 for storing a program of the V850CPU 1005, and a memory SRAM 1008 to be used in the operation of the program of the V850CPU 1005.

In order to have a conversation between the visitor of the outdoor apparatus 2a and the user of the indoor apparatus 2b, moreover, a 2-4 converting circuit 1009 converts an analog signal which is caused to communicate through a 2-line signal of a telephone as an interface signal with the outdoor apparatus 2a side and an analog signal of a 4-line signal to be used by a voice switch IC 1009 and a wireless communicating baseband IC 1011 which constitute a voice circuit 806 of the indoor apparatus 2b.

A talking portion 807 is constituted by a microphone 1015 and a speaker 1016. A voice generated on the base unit side is output from the microphone 1015 to the voice switch 1009. A voice generated in the outdoor apparatus 2a has a power amplified by a speaker amplifier circuit 1010 through the voice switch 1009 and is reproduced by the speaker 1016. The voice switch 1009 constituting a part of the voice circuit 806 is mounted for comparing a volume from the microphone with a volume to the speaker and switching a transmission and a receipt.

The input of the signal from the outdoor apparatus 2a is detected by a main CPU 1017 serving as a control portion 814 and a call detecting portion 804. In the case in which a call is detected, the main CPU 1017 turns on/off an LED 1017 through a broadcasting portion 805 to inform the user of an arrival. When a key matrix switch 1018 corresponding to a response button 808 is pressed down on the base unit side in response thereto, the main CPU 1017 detects the same and carries out a whole control in such a manner that voice talking can be performed.

When an analog image signal is input to the video capture IC 1003 from the outdoor apparatus 2a, the video capture IC 1003 converts the analog image signal into a digital image signal by using the SDRAM 1006.

Furthermore, the V850CPU 1005 implements the function of recording the digital image signal and adding time information to the digital image signal by using time information of a clock timer 1004. The V850CPU 1005 uses the SRAM 1008 to execute a program stored in the FLASH ROM 1007 so that the function is implemented.

A signal generated by the V850CPU 1005 is output to the baseband IC 1011 so as to be output to the cordless telephone remote unit 3b.

Moreover, the image of the visitor sent from the outdoor apparatus 2a is displayed on an LCD panel 1020 by using an LCD driver IC 1019 to be a monitor circuit 801.

The baseband IC 1011 mounts a part of a control portion 814 and a part of a framing block 809 and a voice circuit 806. The baseband IC 1011 adds a synchronizing signal and an error detection code for an error detection which are required for a communication using a time division multiple access to voice information, image information and a control signal, generates a transmission data string corresponding to a frame and a time slot using the time division multiple access, and furthermore, carries out an error detecting process corresponding to the frame and the time slot using the time division multiple access from the received data string and outputs the voice information and the control signal which are received in a time slot having no error.

The storage of the program to be executed by the baseband IC 1011 and a hopping pattern storage portion 812 are implemented by an FLASH ROM 1012.

Moreover, a memory to be used when the baseband IC 1011 executes the program and an image information storage portion 803 implemented in the memory are realized by an SRAM 1013. In a wireless communication between a base unit and an extension base unit, moreover, ID information for causing the extension base unit to identify the base unit is stored in an EEPROM 1014.

A transmitting/receiving portion 810 is implemented by a wireless IC 1015 for carrying out a wireless transmission/receipt using the time division multiple access utilizing frequency hopping for modulating and amplifying an input data string, amplifying and demodulating a received wireless signal and outputting the received data, and a switch 1016 for switching a plurality of antennas.

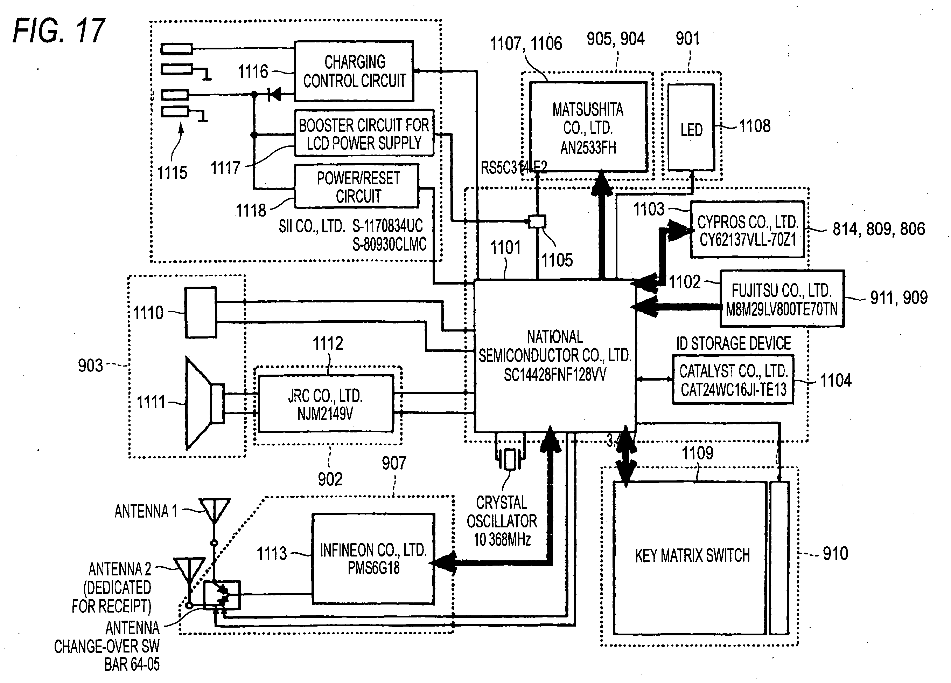

Fig. 17 shows a hardware structure for implementing the cordless telephone remote unit 3b.

A control portion 911 is constituted by a baseband IC 1101, a Flash ROM 1102, an SRAM 1103, an EEPROM 1104, and an LCD power control circuit 1105.

The baseband IC 1101 controls a cordless telephone remote unit by using the Flash ROM 1102 storing a program to be executed by the baseband IC 1101 and the SRAM 1003 to be a memory which is used when the baseband IC 1101 executes the program. The EEPROM 1014 stores ID information for causing the indoor apparatus 2b to identify the cordless telephone remote unit 3a in the wireless communication of the indoor apparatus 2b and the cordless telephone remote unit 3a.

The baseband IC 1101 mounts a framing block 906 to be used in a wireless transmission/receipt and a part of a voice circuit 902. It is possible to talk to the outdoor apparatus 2a or the indoor apparatus 2b through the voice circuit 902.

The Flash ROM 1102 stores a program to be executed by the baseband IC 1101 and a hopping pattern to be used in the wireless communication, and also mounts a hopping pattern storage portion 909.

Moreover, the LCD power control circuit 1105 controls a power supply of an LCD driver IC 1106 based on the control of the baseband IC 1101.

A monitor circuit 904 is mounted by the LCD driver IC 1106. Moreover, a monitor is mounted by an LCD panel 1107.

A broadcasting portion 901 is mounted by an LED 1108 for displaying an incoming call sent from the indoor apparatus 2b. Moreover, a response button 910 for causing the user to carry out a response operation to the incoming call sent from the indoor apparatus 2b is mounted by a key matrix 1109.

A talking portion 903 to be used by the user when talking to the outdoor apparatus 2a through the indoor apparatus 2b is mounted by a microphone 1110 and a speaker 1111. In order to amplify a power for ringing the speaker 1111, moreover, a speaker amplifier circuit 1112 is mounted as a part of the voice circuit 902.

A transmitting/receiving portion 907 for transmitting/receiving communication data on an image and a voice by wireless to/from the baseband IC 1101 is mounted by a wireless IC 1113. Herein, an antenna change-over switch 1114 is used for carrying out a transmission/receipt by using a plurality of antennas.

The extension remote unit mounts a charging control circuit 1116 including a battery so as to be portable, an LCD power booster circuit 1117 to be a power supply for operating the LCD panel 1107, and a power/reset circuit 1118 for controlling the power and reset of the baseband IC 1101. Moreover, a charging terminal 1115 is mounted in order to charge the battery of the extension remote unit.

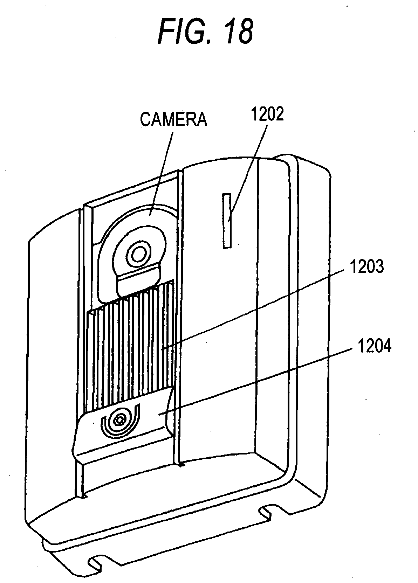

Fig. 18 is a view showing an appearance of the outdoor apparatus 2a.

A camera 1201 for setting a visitor to be an image signal, a microphone 1202 and a speaker 1203 which serve to carry out talking to the visitor, and a call button 1204 for transmitting the arrival of the visitor to the indoor apparatus 2b and the cordless telephone remote unit 4 are provided on the front surface of the outdoor apparatus 2a.

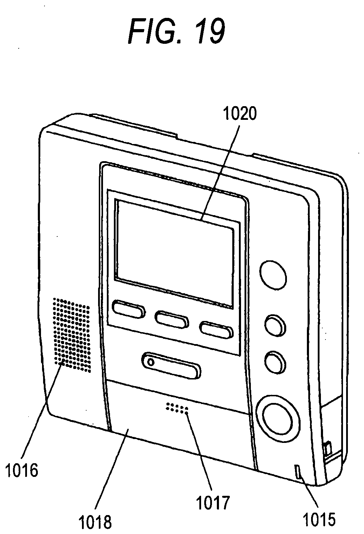

Fig. 19 shows an appearance of the indoor apparatus 2b.

An LCD panel 1020 for projecting an image of the visitor in the outdoor apparatus 2a, a key matrix switch 1018, and an LED 1017 for displaying the arrival through a light are provided on the front surface of the indoor apparatus 2b.

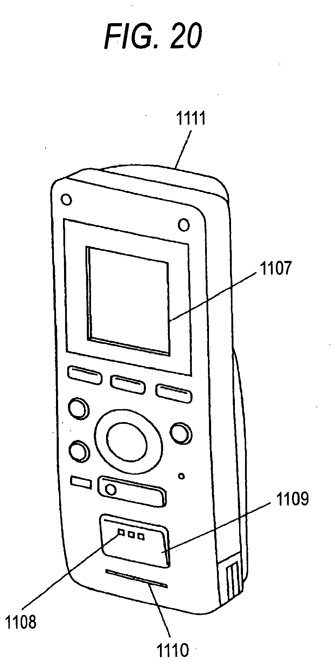

Figs. 20 and 21 are views showing an appearance of the cordless telephone remote unit 4.

The cordless telephone remote unit in Fig. 2 mainly serves as a remote unit of the indoor apparatus 2b, and the cordless telephone remote unit in Fig. 21 can also carry out a transmission from the cordless telephone remote unit.

The cordless telephone remote unit 4 is portable. An LCD panel 1107 for projecting the image of the visitor in the outdoor apparatus 2a, a key matrix switch 1109 and an LED 1108 for displaying the arrival through a light are provided on the front surface of the cordless telephone remote unit 4. Moreover, there are provided a microphone 1110 and a speaker 1111 for carrying out talking to the visitor in the outdoor apparatus 2a.

In the cordless telephone remote unit of Fig. 20, it is possible to respond to an incoming call by using the key matrix switch 1109. In the cordless telephone remote unit of Fig. 21, it is possible to further input and transmit a telephone number by using the key matrix switch.

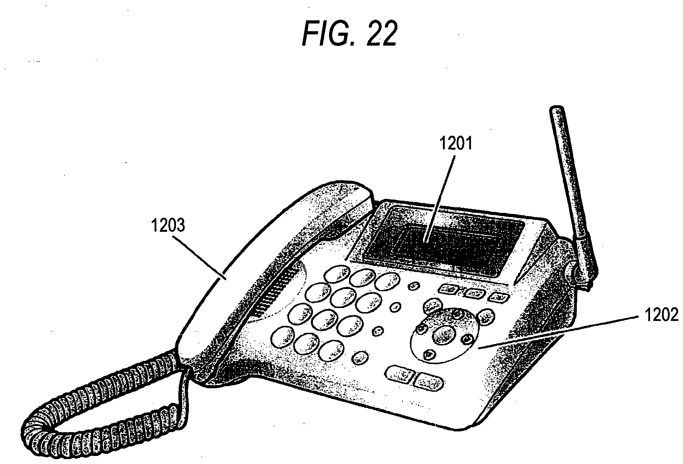

Fig. 22 is a view showing an appearance of the cordless telephone base unit. An operation for carrying out a transmission and responding to an incoming call is performed by using an operation panel 1202 and a state corresponding to the operation is displayed on an LCD panel 1201. Moreover, it is possible to carry out talking by using a handset 1203.

By this structure, the visitor can have a conversation with an indoor user by using the outdoor apparatus 2a. The image of the outdoor apparatus can be output to the indoor user through the cordless telephone remote unit 4 which is also connected to the cordless telephone base unit 3 via the indoor apparatus 2b having the intercom interface 1001. Moreover, it is possible to have a conversation by the outdoor apparatus 2a and the cordless telephone remote unit 4. Therefore, it is possible to produce advantages that the indoor user can use the cordless telephone remote unit 4 while holding the cordless telephone remote unit 4 and moving or putting the cordless telephone remote unit 4 in a convenient place during waiting.

While the embodiment according to the invention has been described above, the invention is not restricted to the embodiment.

While there has been described the example in which the cordless telephone is set to be the main master station and the intercom is set to be the sub master station in the embodiment, the cordless telephone and the intercom may be set to be the sub master station and the main master station, respectively.

Although only one intercom base unit of the intercom is provided as the sub master station in the embodiment, moreover, it is also possible to provide at least two intercoms as in a house with two gates, for example. In that case, at least two sub master stations are provided. By allotting a sub synchronization slot to the respective sub master stations in a transmission slot excluding the main synchronization slot in order to prevent the respective sub synchronization slots for transmitting control data from overlapping with each other, therefore, a wireless remote unit can communicate with the main master station and all of the sub master stations.

While only one wireless remote unit is provided as a slave station in the embodiment, moreover, it is also possible to provide a plurality of wireless remote units.

While there has been described the example in which the wireless remote unit to be operated as the slave station carries out a receipt from both the cordless telephone and the intercom which are operated as the master stations in the embodiment, furthermore, it is also possible to carry out an operation for waiting only one of them. For example, in the case in which the cordless telephone is operated as the main master station and the intercom is operated as the sub master station, and the wireless remote unit receives only the main synchronization slot and receives the control signal of the cordless telephone, and the call of the intercom is generated, the notice of the call of the intercom is given to the cordless telephone through the intercom and the notice of the call of the intercom is given in the main synchronization slot by means of the intercom so that the notice of the call of the intercom is given to the wireless remote unit for receiving only the main synchronization slot in the same manner as in the embodiment. In the case in which the cordless telephone is operated as the main master station and the intercom is operated as the sub master station, and the wireless remote unit receives only the sub synchronization slot and receives the control signal of the intercom, and the incoming call is generated, similarly, the cordless telephone broadcasts the outside line incoming call in the main synchronization slot and the intercom broadcasts the outside line incoming call in the sub synchronization slot upon receipt of the broadcast of the outside line incoming call in the main synchronization slot so that the notice of the outside line incoming call is given to the wireless remote unit for receiving only the sub synchronization slot in the same manner as in the embodiment. In the case in which the wireless remote unit receives only one of the synchronization slots, thus, the notice of the call (the outside line incoming call or the call of the intercom) from the other synchronization slot is given from the master station during waiting. In the case in which the response operation to the call is carried out in the wireless remote unit, the wireless remote unit receives the other control signal in the receipt slot of the slave station at one end and directly establishes a wireless link together with a calling source, thereby carrying out a response process.

Moreover, the invention can widely be applied to a wireless communication system in which two master stations are provided. For example, the invention can also be applied to a structure having a plurality of identical wireless facilities in which one of two cordless telephone remote units serves as a main master station and the other serves as a sub master station and a wireless communication apparatus such as a wireless LAN other than a cordless telephone and an intercom.

There has been described the wireless telephone and method for carrying out a wireless communication with a telephone base unit to be connected to a communication line and a wireless communication with a telephone remote unit to perform the wireless communication with the telephone base unit. By using a communication frame including a first slot pair having a descending slot to be used for receiving a signal from the telephone base unit which is disposed earlier on a time basis and having an ascending slot to be used for transmitting a signal to the telephone base unit which is disposed later on the time basis and a second slot pair having a descending slot to be used for transmitting data to the telephone remote unit which is disposed earlier on the time basis and having an ascending slot to be used for receiving the data from the telephone remote unit which is disposed later on the time basis, the telephone base unit and the telephone remote unit are caused to communicate with each other. In the case in which the telephone remote unit is shared to be a remote unit of the telephone base unit and the wireless communication apparatus, thus, it is possible to transmit data from the communication remote unit to the telephone remote unit without a competition with the telephone base unit.

The embodiment of the invention will be summarized in the following items.

A wireless communication apparatus comprises the following components.

A wireless communication apparatus comprising:
at least one sub master station for receiving control data in a synchronization slot to be a predetermined slot in a plurality of transmission slots in which the control data are transmitted from a main master station and being synchronized with the main master station in a time division multiple access constituted by a receipt slot and the transmission slots and for transmitting the control data if necessary by setting, as a broadcast slot, a slot which does not overlap with the synchronization slot; and
a slave station which can communicate with the main master station and the at least one sub master station through the receipt slot synchronized with the main master station and the transmission slot,
wherein the slave station waits for the control data from the sub master station in the receipt slot based on a time position of the synchronization slot receiving the control data upon receipt of the control data from the main master station.

Moreover, a wireless communication system according to another embodiment comprises the following components.

A wireless communication system which is constituted by a cordless telephone and a wireless intercom which include a wireless communication apparatus for carrying out a wireless communication between a master station and a slave station,
wherein the master station of the cordless telephone has a transmitting portion for transmitting a wireless signal, a receiving portion for receiving the wireless signal and a control portion for controlling the whole apparatus,
the master station of the wireless intercom has a transmitting portion for transmitting a wireless signal, a receiving portion for receiving the wireless signal, and a control portion for controlling the whole apparatus, and
a control is carried out in such a manner that either the master station of the cordless telephone or that of the wireless intercom is operated as a main master station for carrying out a wireless communication with its own slave station and the other is operated as a sub master station which is operated as a slave station of the main master station to carry out the wireless communication with the main master station, and the sub master station is operated as a master station for carrying out a communication with its own slave station.

Furthermore, a wireless communication system according to a further embodiment comprises the following components.

A wireless communication system which is constituted by a cordless telephone and a wireless intercom which include a wireless communication apparatus for carrying out a wireless communication between a master station and a slave station,
wherein the master station of the cordless telephone has a transmitting portion for transmitting a wireless signal, a receiving portion for receiving the wireless signal and a control portion for controlling the whole apparatus,
the master station of the wireless intercom has a transmitting portion for transmitting a wireless signal, a receiving portion for receiving the wireless signal, and a control portion for controlling the whole apparatus,
the slave station to be operated as the slave station of the master station of the cordless telephone and the master station of the wireless intercom has a transmitting portion for transmitting a wireless signal, a receiving portion for receiving the wireless signal, and a control portion for controlling the whole apparatus, and
a control is carried out in such a manner that either the master station of the cordless telephone or that of the wireless intercom is operated as a main master station for carrying out a wireless communication with its own slave station and the other is operated as a sub master station which is operated as a slave station of the main master station to carry out the wireless communication with the main master station, and the sub master station is operated as a master station for carrying out a communication with its own slave station and the slave station carries out the wireless communication as the slave station of the master station of the cordless telephone and the master station of the wireless intercom.

### Industrial Applicability

According to the invention, a sub master station carries out an operation of a master station and that of a slave station so that a cordless telephone, a wireless intercom and a wireless remote unit can be mutually connected through a wireless signal, resulting in a reduction in a deterioration in talking quality which is caused by a wireless interference and the shortage of wireless resources. Therefore, the invention is suitable for a wireless communication system constituted by a cordless telephone and a wireless intercom in which a master station and a slave station carry out a communication in a time division multiplex.

## Claims

1. A wireless communication apparatus (2) comprising:
wireless communicating means (210) adapted for carrying out a first wireless communication with a telephone base unit (3) to be connected to a communication line (5) and adapted for carrying out a second wireless communication with a telephone remote unit (4), and
control means (214);
**characterized by**
the first wireless communication and the second wireless communication using a communication frame comprising a plurality of transmission slots allocated for transmitting at the telephone base unit (3) and a plurality of reception slots allocated for receiving at the telephone base unit (3); and
the control means (214) being adapted for receiving a first control data at one of the plurality of transmission slots from the telephone base unit (3), for synchronizing with the telephone base unit (3) by receiving the first control data, for allocating another of the plurality of transmission slots for transmission to the telephone remote unit (4) and for transmitting a second control data at the another of the plurality of transmission slots to the telephone remote unit (4).

2. The wireless communication apparatus (2) according to claim 1, wherein the first wireless communication uses a first slot pair of the communication frame, the second wireless communication uses a second slot pair of the communication frame, the first slot pair comprising both of the one of the plurality of transmission slots for reception from the telephone base unit (3) and one of the plurality of reception slots for transmission to the telephone base unit (3), the second slot pair comprising both of the one of the another of the plurality of transmission slots for transmission to the telephone remote unit (4) and another of the plurality of reception slots for reception from the telephone remote unit (4).

3. The wireless communication apparatus (2) according to claim 1, wherein the control means (214) is adapted to control the wireless communicating means (210) to synchronize a transmission start timing of the communication frame with the first control data received from the telephone base unit (3) through the one of the plurality of transmission slots for reception from the telephone base unit (3), thereby carrying out a communication.

4. The wireless communication apparatus (2) according to claim 1 further comprising;
an intercom remote unit (2a) having a call button (103); and
a demultiplexing circuit (220) connected to the intercom remote unit (2a),
wherein the control means (214) is adapted to receive a call signal from the intercom remote unit (2a) via the demultiplexing circuit (220) when the call button (103) is pressed down.

5. The wireless communication apparatus (2) according to claim 1 further comprising:
an intercom remote unit (2a) having a call button (103); and
a demultiplexing circuit (220) connected to the intercom remote unit (2a),
wherein the control means (214) is adapted to receive a call signal from the intercom remote unit (2a) via the demultiplexing circuit (220) when the call button (103) is pressed down, and the control means (214) is adapted to transmit the call signal to the telephone remote unit (4) through the another of the plurality of transmission slots for transmission to the telephone remote unit (4).

6. The wireless communication apparatus (2) according to claim 1 further comprising:
an intercom remote unit (2a) having a call button (103); and
a demultiplexing circuit (220) connected to the intercom remote unit (2a),
wherein the control means is adapted to receives a call signal from the intercom remote unit (2a) via the demultiplexing circuit (220) when the call button (103) is pressed down, and the control means (214) is adapted to transmit the call signal to the telephone base unit (3) through the one of the plurality of reception slots for transmission to the telephone base unit (3).

7. The wireless communication apparatus (2) according to claim 1, wherein the control means (214) is adapted for carrying out a control such that a frequency of using the one of the plurality of transmission slots for reception from the telephone base unit (3) is less than a frequency of using the another of the plurality of transmission slots for transmission to the telephone remote unit (4).

8. The wireless communication apparatus (2) according to claim 5, wherein the telephone remote unit (4) comprises a plurality of telephone remote units (4),
the call signal transmitted using the another of the plurality of transmission slots for transmission to the telephone remote units (4) includes information for identifying the telephone remote units (4), and the control means (214) is adapted to set the information for identifying the telephone remote units (4) to have a predetermined value when calling all of the plurality of telephone remote units (4).

9. The wireless communication apparatus (2) according to claim 8, wherein the call signal transmitted using the one of the plurality of reception slots for transmission to the telephone base unit (3) includes information for identifying the telephone base unit (3), and the control means (214) is adapted to set the information for identifying the telephone base unit (3) to have a predetermined value when calling all of the plurality of telephone remote units (4) and the telephone base unit (3).

10. The wireless communication apparatus (2) according to claim 1, wherein the intercom remote unit (2a) comprises a camera (101) for picking up an image,
the telephone remote unit (4) comprises a display portion (414), and
the control means (214) is adapted to transmit the call signal using the another of the plurality of transmission slots for transmission to the telephone remote unit (4) including image information picked up by the camera (101), and the telephone remote unit (4) is adapted to display the image.

11. The wireless communication apparatus (2) according to claim 1, wherein the intercom remote unit (2a) comprises a camera (101) for picking up an image,
the telephone base unit (3) comprises a display portion (315), and
the control means (214) is adapted to transmit the call signal using the one of the plurality of reception slots for transmission to the telephone base unit (3) including image information picked up by the camera (101), and the telephone base unit (3) is adapted to display the image.

12. The wireless communication apparatus (2) according to claim 5, further comprising:
a talking portion (102, 207) which is adapted to convert an input voice input from a microphone into an input voice data so as to output to the wireless communicating means (210) and to output an output voice data input from the wireless communicating means (210) to a speaker; wherein
the wireless communicating means (210) is adapted to transmit the input voice data to the telephone remote unit (4) with a third slot of the transmission slot which is different from both of the one of the plurality of transmission slots for reception from the telephone base unit (3) and another of the plurality of transmission slots for transmission to the telephone remote unit (4), and receives the output voice data with a fourth slot corresponding to the third slot,
wherein the control means (214) is adapted to transmits the input voice data using the third slot and transmits the output voice data using the fourth slot upon receiving a confirmation of the call signal from the telephone remote unit (4).

13. The wireless communication apparatus (2) according to claim 6, further comprising:
a talking portion (102, 207) which is adapted to convert an input voice input from a microphone into an input voice data so as to output to the wireless communicating means (210) and to output an output voice data input from the wireless communicating means (210) to a speaker; wherein
the wireless communicating means (210) is adapted to transmit the input voice data to the telephone base unit (3) with a third slot of the transmission slot which is different from both of the one of the plurality of transmission slots for reception from the telephone base unit (3) and another of the plurality of transmission slots for transmission to the telephone remote unit (4), and receives the output voice data with a fourth slot corresponding to the third slot,
wherein the control means (214) is adapted to transmits the input voice data using the third slot and transmits the output voice data using the fourth slot upon receiving a confirmation of the call signal from the telephone base unit (3).

## Patentansprüche

1. Drahtloskommunikationsvorrichtung (2) mit:
einem Drahtloskommunikationsmittel (210), das ausgestaltet ist, eine erste drahtlose Kommunikation mit einer Telefonbasiseinheit (3) auszuführen, die mit einer Kommunikationsleitung (5) zu verbinden ist, und ausgestaltet ist, eine zweite drahtlose Kommunikation mit einer Telefongegeneinheit (4) auszuführen, und
einem Steuermittel (214),
**gekennzeichnet dadurch, dass**
die erste drahtlose Kommunikation und die zweite drahtlose Kommunikation einen Kommunikations-Frame mit mehreren Übermittlungsslots, die zum Übermitteln an der Telefonbasiseinheit (3) zugeordnet sind, und mehreren Empfangsslots verwenden, die zum Empfangen an der Telefonbasiseinheit (3) zugeordnet sind, und
das Steuermittel (214) zum Empfangen von ersten Steuerdaten in einem der mehreren Übermittlungsslots von der Telefonbasiseinheit (3), zum Synchronisieren mit der Telefonbasiseinheit (3) durch Empfangen der ersten Steuerdaten, zum Zuordnen eines anderen der mehreren Übermittlungsslots zur Übermittlung an die Telefongegeneinheit (4) und zum Übermitteln von zweiten Steuerdaten in dem anderen der mehreren Übermittlungsslots an die Telefongegeneinheit (4) ausgestaltet ist.

2. Drahtloskommunikationsvorrichtung (2) nach Anspruch 1, wobei die erste drahtlose Kommunikation ein erstes Slot-Paar des Kommunikations-Frames nutzt, die zweite drahtlose Kommunikation ein zweites Slot-Paar des Kommunikations-Frames nutzt, wobei das erste Slot-Paar sowohl den einen der mehreren Übermittlungsslots zum Empfang von der Telefonbasiseinheit (3) als auch einen der mehreren Empfangsslots zur Übermittlung an die Telefonbasiseinheit (3) umfasst, das zweite Slot-Paar sowohl den einen anderen der mehreren Übermittlungsslots zur Übermittlung an die Telefongegeneinheit (4) als auch einen anderen der mehreren Empfangsslots zum Empfang von der Telefongegeneinheit (4) aufweist.

3. Drahtloskommunikationsvorrichtung (2) nach Anspruch 1, wobei das Steuermittel (214) ausgestaltet ist, das Drahtloskommunikationsmittel (210) zum Synchronisieren eines Übermittlungsstarttimings des Kommunikations-Frames mit den ersten Steuerdaten zu steuern, die von der Telefonbasiseinheit (3) durch den einen der mehreren Übermittlungsslots zum Empfang von der Telefonbasiseinheit (3) empfangen wurden, wodurch eine Kommunikation ausgeführt wird.

4. Drahtloskommunikationsvorrichtung (2) nach Anspruch 1, ferner mit:
einer Intercomgegeneinheit (2a) mit einem Rufknopf (103) und
einer Demultiplexschaltung (220), die mit der Intercomgegeneinheit (2a) verbunden ist,
wobei das Steuermittel (214) ausgestaltet ist, ein Rufsignal von der Intercomgegeneinheit (2a) über die Demultiplexschaltung (220) zu empfangen, wenn der Rufknopf (103) niedergedrückt wird.

5. Drahtloskommunikationsvorrichtung (2) nach Anspruch 1, ferner mit:
einer Intercomgegeneinheit (2a) mit einem Rufknopf (103) und
einer Demultiplexschaltung (220), die mit der Intercomgegeneinheit (2a) verbunden ist,
wobei das Steuermittel (214) ausgestaltet ist, ein Rufsignal von der Intercomgegeneinheit (2a) über die Demultiplexschaltung (220) zu empfangen, wenn der Rufknopf (103) niedergedrückt wird, und das Steuermittel (214) ausgestaltet ist, das Rufsignal an die Telefongegeneinheit (4) durch den anderen der mehreren Übermittlungsslots zur Übermittlung an die Telefongegeneinheit (4) zu übermitteln.

6. Drahtloskommunikationsvorrichtung (2) nach Anspruch 1, ferner mit:
einer Intercomgegeneinheit (2a) mit einem Rufknopf (103) und
einer Demultiplexschaltung (220), die mit der Intercomgegeneinheit (2a) verbunden ist,
wobei das Steuermittel ausgestaltet ist, ein Rufsignal von der Intercomgegeneinheit (2a) über die Demultiplexschaltung (220) zu empfangen, wenn der Rufknopf (103) niedergedrückt wird, und das Steuermittel (214) ausgestaltet ist, das Rufsignal an die Telefonbasiseinheit (3) durch den einen der mehreren Empfangsslots zur Übermittlung an die Telefonbasiseinheit (3) zu übermitteln.

7. Drahtloskommunikationsvorrichtung (2) nach Anspruch 1, wobei das Steuermittel (214) ausgestaltet ist, eine derartige Steuerung auszuführen, dass eine Frequenz des Benutzens des einen der mehreren Übermittlungsslots zum Empfang von der Telefonbasiseinheit (3) geringer ist als eine Frequenz des Benutzens des anderen der mehreren Übermittlungsslots zur Übermittlung an die Telefongegeneinheit (4).

8. Drahtloskommunikationsvorrichtung (2) nach Anspruch 5, wobei die Telefongegeneinheit (4) mehrere Telefongegeneinheiten (4) umfasst,
das unter Verwendung des anderen der mehreren Übermittlungsslots zur Übermittlung an die Telefongegeneinheiten (4) übermittelte Anrufsignal Information zum Identifizieren der Telefongegeneinheiten (4) enthält und das Steuermittel (214) ausgestaltet ist, die Information zum Identifizieren der Telefongegeneinheiten (4) auf einen vorbestimmten Wert einzustellen, wenn alle der mehreren Telefongegeneinheiten (4) gerufen werden.

9. Drahtloskommunikationsvorrichtung (2) nach Anspruch 8, wobei das unter Verwendung des einen der mehreren Empfangsslots zum Übermitteln an die Telefonbasiseinheit (3) übermittelte Rufsignal Information zum Identifizieren der Telefonbasiseinheit (3) enthält und das Steuermittel (214) ausgestaltet ist, die Information zum Identifizieren der Telefonbasiseinheit (3) auf einen vorbestimmten Wert einzustellen, wenn alle der mehreren Telefongegeneinheiten (4) und die Telefonbasiseinheit (3) gerufen werden.

10. Drahtloskommunikationsvorrichtung (2) nach Anspruch 1, wobei die Intercomgegeneinheit (2a) eine Kamera (101) zum Aufnehmen eines Bildes aufweist,
die Telefongegeneinheit (4) einen Anzeigeabschnitt (414) aufweist und
das Steuermittel (214) dazu ausgestaltet ist, das Rufsignal unter Verwendung des anderen der mehreren Übermittlungsslots zur Übermittlung an die Telefongegeneinheit (4) mit Bildinformation zu übermitteln, die von der Kamera (101) aufgenommen wurde, und die Telefongegeneinheit (4) ausgestaltet ist, das Bild anzuzeigen.

11. Drahtloskommunikationsvorrichtung (2) nach Anspruch 1, wobei die Intercomgegeneinheit (2a) eine Kamera (101) zum Aufnehmen eines Bildes aufweist,
die Telefonbasiseinheit (3) einen Anzeigeabschnitt (315) aufweist und
das Steuermittel (214) dazu ausgestaltet ist, das Rufsignal unter Verwendung des einen der mehreren Empfangsslots zur Übermittlung an die Telefonbasiseinheit (3) mit Bildinformation zu übermitteln, die von der Kamera (101) aufgenommen wurde, und die Telefonbasiseinheit (3) ausgestaltet ist, das Bild anzuzeigen.

12. Drahtloskommunikationsvorrichtung (2) nach Anspruch 5, ferner mit:
einem Sprechabschnitt (102, 207), der ausgestaltet ist, eine Spracheingabe, die von einem Mikrofon aufgenommen wurde, in Spracheingabedaten umzusetzen, um sie an das Drahtloskommunikationsmittel (210) auszugeben, und einen Sprachausgangsdateneingang von dem Drahtloskommunikationsmittel (210) an einen Lautsprecher auszugeben, wobei
das Drahtloskommunikationsmittel (210) ausgestaltet ist, die Spracheingangsdaten an die Telefongegeneinheit (4) mit einem dritten Slot des Übermittlungsslots zu übermitteln, der sich sowohl von dem einen der mehreren Übermittlungsslots zum Empfang von der Telefonbasiseinheit (3) als auch einem anderen der mehreren Übermittlungsslots zur Übermittlung an die Telefongegeneinheit (4) unterscheidet, und die Sprachausgabedaten mit einem vierten Slot entsprechend dem dritten Slot empfängt,
wobei das Steuermittel (214) beim Empfangen einer Bestätigung des Rufsignals von der Telefongegeneinheit (4) ausgestaltet ist, die Spracheingangsdaten unter Verwendung des dritten Slots zu übermitteln und die Sprachausgangsdaten unter Verwendung des vierten Slots übermitteln.

13. Drahtloskommunikationsvorrichtung (2) nach Anspruch 6, ferner mit:
einem Sprechabschnitt (102, 207), der ausgestaltet ist, eine Spracheingabe, die von einem Mikrofon aufgenommen wurde, in Spracheingabedaten umzusetzen, um sie an das Drahtloskommunikationsmittel (210) auszugeben, und einen Sprachausgangsdateneingang von dem Drahtloskommunikationsmittel (210) an einen Lautsprecher auszugeben, wobei
das Drahtloskommunikationsmittel (210) ausgestaltet ist, die Spracheingangsdaten an die Telefonbasiseinheit (3) mit einem dritten Slot des Übermittlungsslots zu übermitteln, der sich sowohl von dem einen der mehreren Übermittlungsslots zum Empfang von der Telefonbasiseinheit (3) als auch einem anderen der mehreren Übermittlungsslots zur Übermittlung an die Telefongegeneinheit (4) unterscheidet, und die Sprachausgabedaten mit einem vierten Slot entsprechend dem dritten Slot empfängt,
wobei das Steuermittel (214) beim Empfangen einer Bestätigung des Rufsignals von der Telefonbasiseinheit (3) ausgestaltet ist, die Spracheingangsdaten unter Verwendung des dritten Slots zu übermitteln und die Sprachausgangsdaten unter Verwendung des vierten Slots übermitteln.

## Revendications

1. Dispositif de communication sans fil (2) comprenant:
un moyen de communication sans fil (210) adapté pour mettre en oeuvre une première communication sans fil avec une unité de base de téléphone (3) à connecter à une ligne de communication (5), et adapté pour mettre en oeuvre une deuxième communication sans fil avec une unité distante de téléphone (4), et
un moyen de commande (214),
**caractérisé par le fait que**
la première communication sans fil et la deuxième communication sans fil utilisent une trame de communication comprenant une pluralité de fentes de transmission associées pour transmettre sur l'unité de base de téléphone (3) et une pluralité de fentes de réception associées pour recevoir sur l'unité de base de téléphone (3), et
ledit moyen de commande (214) est adapté pour recevoir, en provenance de ladite unité de base de téléphone (3), de premières données de commande dans une de ladite pluralité de fentes de transmission, pour synchroniser avec l'unité de base de téléphone (3) en recevant les premières données de commande, pour associer une autre de ladite pluralité de fentes de transmission pour la transmission à l'unité distante de téléphone (4), et pour transmettre, à l'unité distante de téléphone (4), de deuxièmes données de commande dans ladite autre de la pluralité de fentes de transmission.

2. Dispositif de communication sans fil (2) selon la revendication 1, dans lequel la première communication sans fil utilise une première paire de fentes de la trame de communication, la deuxième communication sans fil utilise une deuxième paire de fentes de la trame de communication, ladite première paire de fentes comprenant aussi bien ladite une de la pluralité de fentes de transmission pour la réception en provenance de l'unité de base de téléphone (3) qu'une de la pluralité de fentes de réception pour la transmission à l'unité de base de téléphone (3), ladite deuxième paire de fentes comprenant aussi bien ladite une autre de la pluralité de fentes de transmission pour la transmission à l'unité distante de téléphone (4) qu'une autre de la pluralité de fentes de réception pour la réception en provenance de l'unité distante de téléphone (4).

3. Dispositif de communication sans fil (2) selon la revendication 1, dans lequel le moyen de commande (214) est adapté pour commander le moyen de communication sans fil (210) de manière à synchroniser un timing de démarrage de transmission de la trame de communication avec les premières données de commande reçues en provenance de l'unité de base de téléphone (3) par ladite une de la pluralité de fentes de transmission pour la réception en provenance de l'unité de base de téléphone (3), une communication étant ainsi mise en oeuvre.

4. Dispositif de communication sans fil (2) selon la revendication 1, comprenant en outre:
une unité distante intercom (2a) ayant un bouton d'appel (103), et
un circuit de démultiplexage (220) qui est relié à ladite unité distante intercom (2a),
dans lequel le moyen de commande (214) est adapté pour recevoir un signal d'appel de ladite unité distante intercom (2a) via le circuit de démultiplexage (220) lorsque le bouton d'appel (103) est appuyé.

5. Dispositif de communication sans fil (2) selon la revendication 1, comprenant en outre:
une unité distante intercom (2a) ayant un bouton d'appel (103), et
un circuit de démultiplexage (220) qui est relié à ladite unité distante intercom (2a),
dans lequel le moyen de commande (214) est adapté pour recevoir un signal d'appel de ladite unité distante intercom (2a) via le circuit de démultiplexage (220) lorsque le bouton d'appel (103) est appuyé, et le moyen de commande (214) est adapté pour transmettre le signal d'appel à l'unité distante de téléphone (4) par ladite autre de la pluralité de fentes de transmission pour la transmission à l'unité distante de téléphone (4).

6. Dispositif de communication sans fil (2) selon la revendication 1, comprenant en outre:
une unité distante intercom (2a) ayant un bouton d'appel (103), et
un circuit de démultiplexage (220) qui est relié à ladite unité distante intercom (2a),
dans lequel le moyen de commande est adapté pour recevoir un signal d'appel de ladite unité distante intercom (2a) via le circuit de démultiplexage (220) lorsque le bouton d'appel (103) est appuyé, et le moyen de commande (214) est adapté pour transmettre le signal d'appel à l'unité de base de téléphone (3) par ladite une de la pluralité de fentes de réception pour la transmission à l'unité de base de téléphone (3).

7. Dispositif de communication sans fil (2) selon la revendication 1, dans lequel le moyen de commande (214) est adapté pour réaliser une commande telle qu'une fréquence de l'utilisation de ladite une de la pluralité de fentes de transmission pour la réception en provenance de l'unité de base de téléphone (3) est inférieure à une fréquence de l'utilisation de ladite autre de la pluralité de fentes de transmission pour la transmission à l'unité distante de téléphone (4).

8. Dispositif de communication sans fil (2) selon la revendication 5, dans lequel ladite unité distante de téléphone (4) comprend une pluralité d'unités distantes de téléphone (4),
le signal d'appel transmis en utilisant ladite autre de la pluralité de fentes de transmission pour la transmission aux unités distantes de téléphone (4) comprend de l'information pour identifier les unités distantes de téléphone (4), et le moyen de commande (214) est adapté pour ajuster à une valeur prédéterminée l'information pour identifier les unités distantes de téléphone (4) lorsque toutes de la pluralité d'unités distantes de téléphone (4) sont appelées.

9. Dispositif de communication sans fil (2) selon la revendication 8, dans lequel le signal d'appel transmis en utilisant ladite une de la pluralité de fentes de réception pour la transmission à l'unité de base de téléphone (3) comprend de l'information pour identifier l'unité de base de téléphone (3), et le moyen de commande (214) est adapté pour ajuster à une valeur prédéterminée l'information pour identifier l'unité de base de téléphone (3) lorsque toutes de ladite pluralité d'unités distantes de téléphone (4) et l'unité de base de téléphone (3) sont appelées.

10. Dispositif de communication sans fil (2) selon la revendication 1, dans lequel ladite unité distante intercom (2a) présente une caméra (101) pour saisir une image,
ladite unité distante de téléphone (4) comprend une portion d'affichage (414), et
le moyen de commande (214) est adapté pour transmettre le signal d'appel en utilisant ladite autre de la pluralité de fentes de transmission pour la transmission à l'unité distante de téléphone (4) avec de l'information d'image saisie par la caméra (101), et l'unité distante de téléphone (4) est adaptée pour afficher l'image.

11. Dispositif de communication sans fil (2) selon la revendication 1, dans lequel ladite unité distante intercom (2a) présente une caméra (101) pour saisir une image,
ladite unité de base de téléphone (3) comprend une portion d'affichage (315), et
le moyen de commande (214) est adapté pour transmettre le signal d'appel en utilisant ladite une de la pluralité de fentes de réception pour la transmission à l'unité de base de téléphone (3) avec de l'information d'image saisie par la caméra (101), et l'unité de base de téléphone (3) est adaptée pour afficher l'image.

12. Dispositif de communication sans fil (2) selon la revendication 5, comprenant en outre:
une portion de conversation (102, 207) qui est adaptée pour convertir une entrée vocale reçue par un microphone en données d'entrée vocale afin de délivrer celles-ci au moyen de communication sans fil (210), et pour délivrer une entrée de données de sortie vocale depuis le moyen de communication sans fil (210) à un haut-parleur, dans lequel
le moyen de communication sans fil (210) est adapté pour transmettre les données d'entrée vocale à l'unité distante de téléphone (4) avec une troisième fente de la fente de transmission qui est différente aussi bien de ladite une de la pluralité de fentes de transmission pour la réception en provenance de l'unité de base de téléphone (3) que d'une autre de la pluralité de fentes de transmission pour la transmission à l'unité distante de téléphone (4), et reçoit les données de sortie vocale avec une quatrième fente selon la troisième fente,
dans lequel le moyen de commande (214) est adapté, en recevant une confirmation du signal d'appel en provenance de l'unité distante de téléphone (4), pour transmettre les données d'entrée vocale en utilisant la troisième fente et pour transmettre les données de sortie vocale en utilisant la quatrième fente.

13. Dispositif de communication sans fil (2) selon la revendication 6, comprenant en outre:
une portion de conversation (102, 207) qui est adaptée pour convertir une entrée vocale reçue par un microphone en données d'entrée vocale afin de délivrer celles-ci au moyen de communication sans fil (210), et pour délivrer une entrée de données de sortie vocale depuis le moyen de communication sans fil (210) à un haut-parleur, dans lequel
le moyen de communication sans fil (210) est adapté pour transmettre les données d'entrée vocale à l'unité de base de téléphone (3) avec une troisième fente de la fente de transmission qui est différente aussi bien de ladite une de la pluralité de fentes de transmission pour la réception en provenance de l'unité de base de téléphone (3) que d'une autre de la pluralité de fentes de transmission pour la transmission à l'unité distante de téléphone (4), et reçoit les données de sortie vocale avec une quatrième fente selon la troisième fente,
dans lequel le moyen de commande (214) est adapté, en recevant une confirmation du signal d'appel en provenance de l'unité de base de téléphone (3), pour transmettre les données d'entrée vocale en utilisant la troisième fente et pour transmettre les données de sortie vocale en utilisant la quatrième fente.
